(19) Europäisches Patentamt
European Patent Office
Office européen des brevets

(11) **EP 4 752 603 A1**

(12) **EUROPEAN PATENT APPLICATION**
published in accordance with Art. 153(4) EPC

(43) Date of publication:
**03.06.2026 Bulletin 2026/23**

(21) Application number: **24902860.6**

(22) Date of filing: **11.12.2024**

(51) International Patent Classification (IPC):
***G01S 19/24*** (2010.01)

(52) Cooperative Patent Classification (CPC):
**G01S 19/24; G01S 19/37**

(86) International application number:
**PCT/CN2024/138546**

(87) International publication number:
**WO 2025/124441 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.12.2023 CN 202311719899**

(71) Applicant: **HUAWEI TECHNOLOGIES CO., LTD.
Shenzhen 518129 (CN)**

(72) Inventors:
• **ZHANG, Xiaoni**
  **Shenzhen, Guangdong 518129 (CN)**
• **WU, Mouyan**
  **Shenzhen, Guangdong 518129 (CN)**
• **LI, Wenyi**
  **Shenzhen, Guangdong 518129 (CN)**
• **HUANG, Guosheng**
  **Shenzhen, Guangdong 518129 (CN)**
• **PAN, Dongrui**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CONFIGURATION METHOD AND RELATED APPARATUS**

(57)     A configuration method and a related apparatus are provided. The method is applied to an electronic device (100). The method includes: The electronic device (100) receives a first satellite signal of a same satellite by using n signal channels (200), for example, captures and tracks the first satellite signal by using the n signal channels (200). Each signal channel (200) includes m correlators. Spacings between any two adjacent correlators are equal. Herein, n and m are integers greater than 1. The electronic device (100) obtains first code loop adjustment information and an observation quantity of the first satellite signal based on output values of correlators of the n signal channels (200). The first code loop adjustment information is used to adjust pseudo-code phases of the n signal channels (200). The observation quantity of the first satellite signal is used to obtain position information of the electronic device (100). In the method, outputs of original correlators can be spliced into required data, so that a correlator configuration can be flexibly adjusted without changing a hardware structure of the electronic device (100).

FIG. 10

## Description

This application claims priority to Chinese Patent Application No. 202311719899.8, filed with the China National Intellectual Property Administration on December 14, 2023 and entitled "CONFIGURATION METHOD AND RELATED APPARATUS", which is incorporated herein by reference in its entirety.

## TECHNICAL FIELD

This application relates to the field of computer technologies, and in particular, to a configuration method and a related apparatus.

## BACKGROUND

A global navigation satellite system (global navigation satellite system, GNSS) receiver may include a radio frequency front end, a digital signal processor (digital signal processor, DSP), and a positioning and navigation module. The DSP can capture and track signals of different satellites through a hardware circuit (including a correlator, an integrator, and the like) and a capturing loop and a tracking loop in a software form, to implement positioning and navigation functions. The tracking loop is closed-circuit feedback, and a code tracking loop in the tracking loop needs to obtain outputs of a plurality of correlators each time to calculate corresponding adjustment information. Because signal quality of different satellites is different, to achieve better tracking effect, a configuration such as a correlator spacing and a branch quantity may need to be adjusted. However, a correlator configuration is fixed currently, and cannot be adjusted flexibly.

## SUMMARY

This application discloses a configuration method and a related apparatus, to implement flexible adjustment of a correlator configuration without changing a hardware circuit of a digital signal processor.

According to a first aspect, this application provides a configuration method, applied to an electronic device. The method includes: The electronic device may receive a first satellite signal of a same satellite by using n signal channels, for example, capture and track the first satellite signal by using the n signal channels. Each of the n signal channels includes m correlators. Spacings between any two adjacent correlators are equal. It may be understood that a correlator spacing and a correlator quantity of each signal channel are fixed. Herein, n and m are integers greater than 1. The electronic device may obtain first code loop adjustment information (for example, a pseudo-code numerically controlled oscillator NCO adjustment quantity) and an observation quantity of the first satellite signal (for example, a global navigation satellite system GNSS measurement value and a navigation message) based on output values of correlators of the n signal channels. The first code loop adjustment information is used to adjust pseudo-code phases of the n signal channels. In this way, pseudo-code phases duplicated by using the n signal channels are consistent with a pseudo-code phase of the received first satellite signal, and the observation quantity of the first satellite signal is used to obtain position information of the electronic device. For example, the electronic device displays the obtained position information.

In some examples, the electronic device is a terminal device including a GNSS receiving module. In other examples, the electronic device is a GNSS receiver. In other examples, the electronic device is a digital signal processor DSP in a GNSS receiver.

In some examples, the n signal channels and one code tracking loop (in a software form) may form one logical channel, and the logical channel is used to track the first satellite signal. In some examples, the code tracking loop may receive the first satellite signal captured by the n signal channels, and obtain the first code loop adjustment information based on the output values of the correlators of the n signal channels. Then, the code tracking loop may send the first code loop adjustment information to the n signal channels. Each of the n signal channels may use the same first code loop adjustment information to adjust a pseudo-code phase. Because the code tracking loop is closed-circuit feedback, the foregoing process may be cyclically performed a plurality of times (but output values of the correlators of the n signal channels in each time may be different and code loop adjustment information obtained in each time may be different), to implement the pseudo-code phases duplicated by the n signal channels being consistent with the pseudo-code phase of the received first satellite signal. In some examples, the code tracking loop may obtain the observation quantity of the first satellite signal based on the output values of the correlators of the n signal channels in any one of the foregoing plurality of times of cyclic execution, and send the observation quantity to a position solving module, so that the position solving module obtains the position information of the electronic device based on the observation quantity of the first satellite signal. The position solving module may belong to the electronic device, or may not belong to the electronic device. For example, when the electronic device is a DSP, the position solving module is not included; or when the electronic device is a terminal device or a GNSS receiver, the position solving module is included.

In some examples, the electronic device includes N signal channels. The N signal channels include the n signal channels and z signal channels. The n signal channels are used to track a satellite signal of a first satellite. The z signal channels are used to track a satellite signal of a second satellite. Herein, N is a positive integer greater than 1, both n and z are less than N, and n and z may be different or may be the same.

In the foregoing method, the electronic device may use the n signal channels to track a signal of a same satellite, and comprehensively use the output values of the correlators of the n signal channels rather than only one signal channel to track a signal of one satellite, to achieve effect of adjusting a correlator configuration. For example, for different satellites, quantities of signal channels used to track satellite signals are different (for example, n and z are different), to implement differentiated correlator configurations for different satellites, thereby achieving better tracking effect. It may be understood that output results of original correlators are spliced into required data to achieve equivalent extension effect, so that the correlator configuration is flexibly adjusted without changing a hardware structure of the electronic device (for example, a correlator spacing and a correlator quantity in any one signal channel). In this way, a satellite signal has higher tracking precision and can better adapt to changes in different scenarios. In addition, a performance requirement, overall power consumption, and costs of a processor are not increased, and availability is relatively high.

In a possible implementation, when obtaining the first code loop adjustment information and the observation quantity of the first satellite signal based on the output values of the correlators of the n signal channels, the electronic device may obtain the first code loop adjustment information and the observation quantity of the first satellite signal based on output values of $m'$ correlators, where the $m'$ correlators are some or all of the $n \times m$ correlators of the foregoing n signal channels, and $m'$ is an integer greater than 1 and less than or equal to $n \times m$.

In some examples, the electronic device may determine the $m'$ correlators from the $n \times m$ correlators of the n signal channels based on a preset parameter. The preset parameter includes, for example, at least one of the following: a satellite constellation of the first satellite signal, a satellite frequency of the first satellite signal, or information about an environment in which the electronic device is located. For example, the electronic device may determine a correlator spacing based on the preset parameter, and capture the output values of the $m'$ correlators from the output values of the $n \times m$ correlators of the n signal channels based on the correlator spacing; or the electronic device may determine a value of $m'$ based on the preset parameter, and then capture the output values of the $m'$ correlators based on the value of $m'$.

In the foregoing method, the electronic device may select the $m'$ correlators from the $n \times m$ correlators of the n signal channels according to an actual requirement, and comprehensively use the output values of the $m'$ correlators. It may be understood that the output results of the original correlators are spliced into the required data to achieve equivalent extension effect, and a manner of adjusting a correlator configuration is more flexible.

In a possible implementation, the n signal channels include one primary channel and n - 1 secondary channels, and the secondary channel has an offset relative to the primary channel. For example, different secondary channels have different offsets relative to the primary channel.

In a possible implementation, spacings between any two adjacent correlators in each signal channel of the electronic device are equal and are $x$. The electronic device may obtain the correlator configuration of the n signal channels through adjustment in an equal-spacing manner. In this case, spacings between any two adjacent correlators in the $m'$ correlators are equal and are $x'$. In addition, in the n signal channels (including one primary channel and $n$ - 1 secondary channels), an offset of a $d^{th}$ secondary channel relative to the primary channel is $d \times k$, $d$ is a positive integer less than $n$, and $k$ is a rational common factor of $x$ and $x'$, where $x = n \times k$.

In the foregoing method, the $m'$ correlators of the n signal channels and m correlators of one original signal channel may be all equally spaced, that is, spacings between any two adjacent correlators are equal. Therefore, adjustment granularity in an early part and that in a late part based on the code loop adjustment information are consistent (both are $x'$), and implementation of an adjustment process is more convenient and stable.

This is not limited thereto. In another possible implementation, the electronic device may also obtain the correlator configuration of the n signal channels through adjustment in an unequal-spacing manner. In this case, the spacings between adjacent correlators in the m' correlators may be unequal. For example, a spacing between a $1^{st}$ correlator and a $2^{nd}$ correlator is different from a spacing between the $2^{nd}$ correlator and a $3^{rd}$ correlator, and an adjustment manner is flexible and diverse.

In a possible implementation, in the m' correlators, a prompt correlator is a $\left(\frac{1+m'}{2}\right)^{th}$ correlator (that is, at a middle position), or a prompt correlator is located after a $\left(\frac{1+m'}{2}\right)^{th}$ correlator (that is, at a rear position).

In the foregoing method, the prompt correlator may be disposed in the middle, or may not be disposed in the middle but on a rear side, and an implementation is relatively flexible. In addition, when the prompt correlator is located on the rear side, a proportion of early correlators is larger. This may be understood as that more attention is paid to energy of the early part. In this way, a problem existing in a multipath scenario can be effectively resolved. Tracking of a non-line-of-sight NLOS signal cannot be switched to tracking of a line-of-sight LOS signal. In other words, even if the tracking loop accidentally tracks down an NLOS signal, if a peak value is identified on an early branch, that is, existence of a LOS peak is identified in the early part, the tracking loop may switch to track a LOS signal, thereby achieving better anti-multipath effect.

In a possible implementation, the method further includes: The electronic device may obtain first carrier loop adjustment information (for example, a carrier NCO adjustment quantity) based on the output values of the correlators of the n signal channels, where the first carrier loop adjustment information is used to adjust carrier phases or frequency offsets of the n signal channels.

In the foregoing method, n signal channels used to track a signal of a same satellite may share same code loop adjustment information and carrier loop adjustment information, to ensure that update of a code tracking loop and a carrier tracking loop of the n signal channels is fully synchronized, thereby improving reliability of tracking the signal of the same satellite by using the n signal channels.

In a possible implementation, the correlator configuration of the n signal channels is in a multi-channel mode (that is, tracking a satellite signal of a same satellite by using a plurality of signal channels). The multi-channel mode may include a first mode or a second mode. A correlator span in the first mode is less than or equal to a first preset span, a correlator span in the second mode is greater than a second preset span, and the first preset span is less than or equal to the second preset span; and/or a correlator spacing in the first mode is less than or equal to a first preset spacing, a correlator spacing in the second mode is greater than a second preset spacing, and the first preset spacing is less than or equal to the second preset spacing. The correlator span is a span between a correlator with a smallest chip and a correlator with a largest chip. For example, the first preset span is equal to the second preset span and is a correlator span of one signal channel (which may be understood as a single-channel mode) of the electronic device, and the first preset spacing is equal to the second preset spacing and is a correlator spacing of one signal channel.

In the foregoing method, a correlator in the first mode may search for a correlation peak in a smaller range and/or at finer granularity, and may identify a finer correlator energy peak deviation (such as, a multipath error); and a correlator in the second mode may search for a correlation peak in a larger range and/or at coarser granularity, and may search for a LOS peak in a larger range. The two modes may be applied to different scenarios. For example, in a harsh environment, the first mode is used when a multipath signal is relatively close to a main signal, and the second mode is used when a multipath signal is relatively distant from a main signal, to effectively improve tracking resolution and tracking precision and robustness.

In a possible implementation, the method further includes: The electronic device receives the first satellite signal of the same satellite by using the n signal channels, and the electronic device may first determine whether a first condition is met. When the first condition is met, the electronic device configures a correlator configuration mode of the n signal channels as the first mode; or when the first condition is not met, the electronic device configures a correlator configuration mode of the n signal channels as the second mode. The first condition is related to a first parameter. The first parameter includes at least one of the following: a quantity of currently idle signal channels, a satellite constellation of the first satellite signal, a satellite frequency of the first satellite signal, or information about an environment in which the electronic device is located. For example, the first condition is that the quantity of currently idle signal channels is greater than or equal to a first quantity of channels.

In the foregoing method, that the electronic device may select and use the first mode or the second mode based on the first parameter may be understood as selecting a correlator configuration applicable to a current scenario based on a scenario. For example, the first mode is used when there are a relatively large quantity of currently idle signal channels, and the second mode is used when there are a relatively small quantity of currently idle signal channels, to effectively use idle signal channels to improve tracking precision. Therefore, a tracking manner can better adapt to changes in different scenarios, to effectively improve tracking resolution and tracking precision and robustness.

In a possible implementation, the method further includes: After the electronic device obtains the first code loop adjustment information and the observation quantity of the first satellite signal based on the output values of the correlators of the n signal channels (for example, after the code tracking loop sends the observation quantity of the first satellite signal to the position solving module), when the correlator configuration of the n signal channels is in the first mode, the electronic device may determine whether a pseudo-range residual is greater than or equal to a first threshold (for example, related to a length corresponding to a maximum offset chip phase of a current correlator); and when the pseudo-range residual is greater than or equal to the first threshold, the electronic device may set the correlator configuration of the n signal channels to be in the second mode. For example, the code tracking loop may send first indication information (the indication information in this application may also be referred to as control information) to the n signal channels (to indicate to set the correlator configuration of the n signal channels to be in the second mode). Similarly, when the correlator configuration of the n signal channels is in the second mode, the electronic device may determine whether a pseudo-range residual is less than or equal to a second threshold (for example, related to a length corresponding to a minimum offset chip phase of a current correlator); and when the pseudo-range residual is less than or equal to the second threshold, the electronic device may set the correlator configuration of the n signal channels to be in the first mode. For example, the code tracking loop sends second indication information (to indicate to set the correlator configuration of the n signal channels to be in the first mode) to the n signal channels.

In the foregoing method, the electronic device may adaptively switch between the first mode and the second mode based on the pseudo-range residual. A magnitude of the pseudo-range residual may represent a deviation of the code tracking loop. Therefore, the correlator configuration can be intelligently adjusted based on tracking effect. A tracking manner can better adapt to changes in different scenarios, to effectively improve tracking resolution and tracking precision and robustness.

In a possible implementation, before the electronic device receives the first satellite signal of the same satellite by using the n signal channels, the electronic device may first determine whether the second condition is met. The second condition is related to a second parameter. The second parameter includes at least one of the following: the quantity of currently idle signal channels, the satellite constellation of the first satellite signal, the satellite frequency of the first satellite signal, or the information about the environment in which the electronic device is located. For example, the second condition is that the frequency of the first satellite signal is L5, and the quantity of currently idle signal channels is greater than or equal to a preset proportion of a total quantity of channels. When the second condition is met, the electronic device may receive the first satellite signal of the same satellite by using the n signal channels, and use the output values of the correlators of the n signal channels. When the second condition is not met, the electronic device may receive the first satellite signal by using one signal channel, and use output values of correlators of the signal channel (for example, including obtaining the code loop adjustment information, the carrier loop adjustment information, and the observation quantity of the first satellite signal).

In the foregoing method, the electronic device may select and use, based on the first parameter, the single-channel mode (that is, tracking the first satellite signal by using one signal channel) or the multi-channel mode (that is, tracking the first satellite signal by using the n signal channels). This may be understood as selecting a correlator configuration applicable to a current scenario based on the scenario. For example, the multi-channel mode is used when there are a large quantity of currently idle signal channels; and the single-channel mode is used when there are a small quantity of currently idle signal channels, to effectively use idle signal channels to improve tracking precision. Therefore, the tracking manner can better adapt to changes in different scenarios, to effectively improve tracking resolution and tracking precision and robustness.

In a possible implementation, the method further includes: After the electronic device obtains the first code loop adjustment information and the observation quantity of the first satellite signal based on the output values of the correlators of the n signal channels (for example, after the code tracking loop sends the observation quantity of the first satellite signal to the position solving module), the electronic device may determine whether quality of the first satellite signal is higher than or equal to a preset quality threshold. When the quality of the first satellite signal is higher than or equal to the preset quality threshold, the electronic device may receive the first satellite signal by using one signal channel, and use output values of correlators of the signal channel. For example, the code tracking loop may send third indication information to the n signal channels (to indicate to track the first satellite signal by using one signal channel).

In the foregoing method, the electronic device may adaptively switch between the single-channel mode (that is, tracking the first satellite signal by using one signal channel) and the multi-channel mode (that is, tracking the first satellite signal by using the n signal channels) based on the quality of the first satellite signal. The single-channel mode is used when the quality of the first satellite signal is relatively good. In this case, relatively good tracking effect can be achieved without using the multi-channel mode for tracking. Therefore, by currently using the single-channel mode, an overall quantity of tracked satellites due to occupation of too many multi-channel resources can be reduced when tracking effect is ensured. Higher availability is implemented.

In a possible implementation, the method further includes: After the electronic device obtains the first code loop adjustment information and the observation quantity of the first satellite signal based on the output values of the correlators of the n signal channels (for example, after the code tracking loop sends the observation quantity of the first satellite signal to the position solving module), the electronic device may determine, based on a third parameter, whether to adjust the correlator configuration of the n signal channels. The third parameter includes at least one of the following: the quantity of currently idle signal channels, a time interval for modifying the correlator configuration of the n signal channels, the satellite constellation of the first satellite signal, the satellite frequency of the first satellite signal, a pseudo-range residual, the first code loop adjustment information, or the information about the environment in which the electronic device is located. When determining to adjust the correlator configuration of the n signal channels, the electronic device adjusts the correlator configuration of the n signal channels, for example, adjusts at least one of the following correlator configurations: a quantity of signal channels used to track the first satellite signal, a correlator spacing, a quantity of correlators, a position of the prompt correlator, or a correlator span. For example, the code tracking loop may send fourth indication information to the n signal channels (the fourth indication information indicates the n signal channels to adjust the correlator configuration).

In the foregoing method, each time after obtaining the observation quantity of the first satellite signal, the electronic device may determine, based on an actual scenario, whether to adjust the correlator configuration, to adaptively adjust the correlator configuration of the signal channel in a satellite signal tracking process. For example, the correlator configuration is dynamically adjusted in different satellites, different environments, and different time periods, to further adapt to changes in different scenarios and improve tracking precision and robustness of a satellite signal. In addition, content of the adjustable correlator configuration is diverse, adjustment is more flexible, and application scenarios are more extensive.

In a possible implementation, the method further includes: The electronic device receives a second satellite signal by using a first signal channel (one signal channel), for example, captures and tracks a second satellite signal by using the first signal channel. This may be understood as using one signal channel by default or for a first time to track a signal of one satellite. The electronic device obtains second code loop adjustment information and an observation quantity of the second satellite signal based on output values of correlators of the first signal channel. The second code loop adjustment information is similar to the first code loop adjustment information, and is used to adjust a pseudo-code phase of the first signal channel. The observation quantity of the second satellite signal is similar to the observation quantity of the first satellite signal, and is used to obtain position information of the electronic device. Then, the electronic device may determine, based on a fourth parameter, whether to adjust the correlator configuration of the first signal channel. The fourth parameter includes at least one of the following: the quantity of currently idle signal channels, a time interval for modifying the correlator configuration of the first signal channel, a satellite constellation of the second satellite signal, a satellite frequency of the second satellite signal, a pseudo-range residual, the second code loop adjustment information, or the information about the environment in which the electronic device is located. When determining to adjust the correlator configuration of the first signal channel, the electronic device adjusts at least one of the following correlator configurations of the first signal channel: a quantity of signal channels used to track the second satellite signal, the correlator spacing, the quantity of correlators, the position of the prompt correlator, or the correlator span. For example, the code tracking loop may send fifth indication information (to indicate the first signal channel to adjust the correlator configuration) to the first signal channel.

In a possible implementation, the second satellite signal and the first satellite signal belong to signals of a same satellite. When the electronic device sets the correlator configuration of the first signal channel to be in the multi-channel mode based on the fourth parameter, the electronic device may receive the first satellite signal and/or the second satellite signal of the same satellite by using the n signal channels.

In the foregoing method, after a tracking process and a positioning process are performed based on an initial configuration (that is, tracking the second satellite signal by using one signal channel), whether to adjust the correlator configuration may be selected based on an actual scenario. For example, it may be selected to adjust the correlator configuration to tracking the second satellite signal by using the n signal channels (that is, using the multi-channel mode). It may be understood that the configuration of the multi-channel mode is determined based on an actual tracking scenario. In this way, the determined configuration of the multi-channel mode better conforms to the actual scenario. The following case may be avoided: Tracking effect of another satellite signal is affected because a relatively large quantity of signal channels are occupied when the multi-channel mode is used from the beginning. Therefore, tracking precision and robustness of a satellite signal are further improved.

In a possible implementation, the n signal channels are some signal channels included in the electronic device. For example, the electronic device includes N signal channels, where N is a positive integer, and N is far greater than n.

In the foregoing method, currently, a hardware configuration of the electronic device is usually relatively high, and therefore a total quantity of included signal channels is usually relatively large. If one signal channel is used to track a signal of one satellite, there are a relatively large quantity of idle channels. Therefore, when the n signal channels are used to track a signal of a same satellite, the correlator configuration can be flexibly adjusted without modifying a hardware structure of a signal channel/correlator, to effectively use the idle channels and improve product availability.

According to a second aspect, this application provides an electronic device, including n signal channels. Herein, n is a positive integer greater than 1. The electronic device is configured to perform the configuration method provided in the first aspect or any one of the implementations of the first aspect.

According to a third aspect, this application provides an electronic device, including a transceiver, a processor, and a memory. The memory is configured to store a computer program, and the processor invokes the computer program, so that the electronic device performs the configuration method provided in the first aspect or any one of the implementations of the first aspect.

According to a fourth aspect, this application provides a computer storage medium. The computer storage medium stores a computer program. When the computer program is executed by a processor, the configuration method provided in the first aspect or any one of the implementations of the first aspect is performed.

According to a fifth aspect, this application provides a computer program product. When the computer program product runs on a device, the device is enabled to perform the configuration method provided in the first aspect or any one of the implementations of the first aspect.

According to a sixth aspect, this application provides an electronic device. The electronic device includes the method or the apparatus for executing any aspect or any implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this application do not necessarily refer to a same implementation. Further, the technical features, the technical solutions, and the beneficial effects described in this application may be combined in any appropriate manner. Persons skilled in the art may understand that this application may be implemented without one or more specific technical features, technical solutions, or beneficial effects in a specific implementation. In another implementation, additional technical features and beneficial effects may be further identified in a specific implementation that does not reflect all implementations.

## BRIEF DESCRIPTION OF DRAWINGS

The following describes the accompanying drawings used in this application.

FIG. 1 is a diagram of a structure of an electronic device according to this application;
FIG. 2 is a diagram of a structure of another electronic device according to this application;
FIG. 3 is a diagram of a structure of another electronic device according to this application;
FIG. 4 is a diagram of a signal channel according to this application;
FIG. 5A is a diagram of adjusting a correlator configuration according to this application;
FIG. 5B and FIG. 5C are diagrams of some multi-channel modes according to this application;
FIG. 6A is another diagram of adjusting a correlator configuration according to this application;
FIG. 6B and FIG. 6C are other diagrams of some multi-channel modes according to this application;
FIG. 7 is another diagram of a signal channel according to this application;
FIG. 8A, FIG. 8B, and FIG. 8C are other diagrams of some multi-channel modes according to this application;
FIG. 9 is a schematic flowchart of a configuration method according to this application;
FIG. 10 is a schematic flowchart of a configuration method according to this application;
FIG. 11 is a schematic flowchart of another configuration method according to this application;
FIG. 12 is a schematic flowchart of another configuration method according to this application; and

FIG. 13 is a diagram of state switching of a correlator configuration according to this application.

## DESCRIPTION OF EMBODIMENTS

The following describes technical solutions of embodiments in this application with reference to accompanying drawings. Terms used in implementations of embodiments of this application are merely intended to interpret specific embodiments of this application, but are not intended to limit this application.

In the descriptions of embodiments of this application, unless otherwise specified, "/" indicates "or". For example, A/B may indicate A or B. "And/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

In the descriptions of embodiments of this application, when a letter is used to represent a definition, an uppercase form and a lowercase form of a same letter may respectively represent different definitions. For example, the following "N" and "n" represent different definitions.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

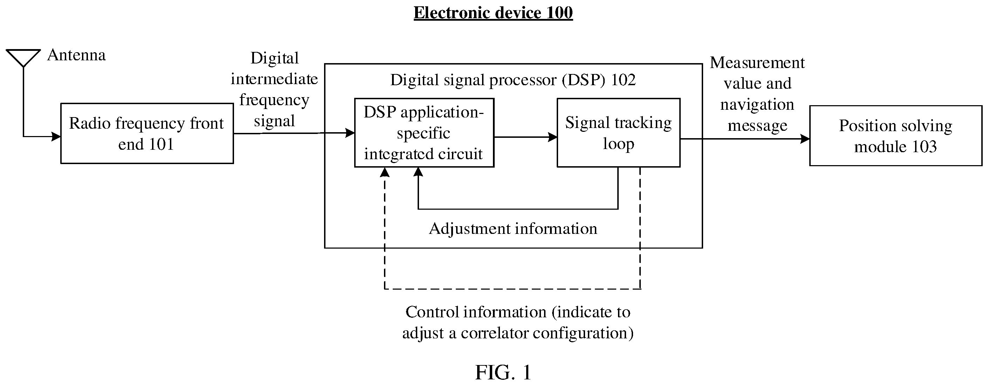

A global navigation satellite system (global navigation satellite system, GNSS) receiver may include a radio frequency (radio frequency, RF) front end, a digital signal processor (digital signal processor, DSP), and a positioning and navigation module. For a specific example, refer to FIG. 1.

FIG. 1 is a diagram of a structure of an example of an electronic device 100. As shown in FIG. 1, the electronic device 100 may include a GNSS receiving module, and may specifically include one or more antennas, a radio frequency front end 101, a DSP 102, and a position solving module 103. Herein,

The radio frequency front end 101 may include an amplifier (not shown), a filter (not shown), and an analog-to-digital (analog/digit, A/D) converter (analog-to-digital, ADC) (not shown). The radio frequency front end 101 may receive a GNSS satellite signal by using an antenna. After being processed by an amplifier, a filter, and the like, the GNSS satellite signal is mixed with a sine wave local oscillator signal and down-converted to an intermediate frequency (intermediate frequency, IF)/near-baseband signal, and then the IF/near-baseband signal is converted into a discrete-time digital intermediate frequency signal by using the A/D converter. The radio frequency front end 101 may send the digital intermediate frequency signal to the DSP 102 for processing.

The DSP 102 may be configured to capture and track a GNSS satellite signal. The capturing may be understood as coarse searching, and only a chip position and a frequency range need to be approximately determined. The tracking may be understood as fine searching, and a chip position and a frequency position need to be accurately determined. The DSP 102 may be configured to strip a carrier (including a Doppler frequency shift) from a digital intermediate frequency signal through frequency mixing, strip a C/A code (which may also be referred to as a pseudo-code) from the digital intermediate frequency signal through a coarse acquisition (coarse acquisition, C/A) code correlation operation, and then obtain navigation message data through demodulation, to capture and track the GNSS satellite signal. A processing process of the DSP 102 requires a large quantity of correlation operations, and direct processing of the digital intermediate frequency signal has a relatively high requirement on a microprocessor. Therefore, the DSP 102 is usually implemented in a manner of combining software and hardware circuits. The DSP 102 may include an application-specific integrated circuit (application specific integrated circuit, ASIC) in a hardware form, and a signal capturing loop (not shown) and a signal tracking loop in a software form. The ASIC may include a correlator, an integrator, and the like. In an implementation, the DSP 102 may process the digital intermediate frequency signal by using the correlator, the integrator, and the like in the ASIC to obtain a digital signal with a relatively low frequency, and then process the digital signal by using the signal capturing loop and the signal tracking loop.

The DSP 102 may send an obtained GNSS measurement value and a navigation message to the position solving module 103 (in a software form) for processing. The position solving module 103 may obtain a positioning result based on the GNSS measurement value and the navigation message, for example, display the positioning result on a display (not shown) of the electronic device 100. The GNSS measurement value may include but is not limited to a carrier phase, a pseudo-range (including a pseudo-code phase), a Doppler frequency shift, and the like. The navigation message may include but is not limited to a time, a satellite orbit, an ionospheric delay, and the like.

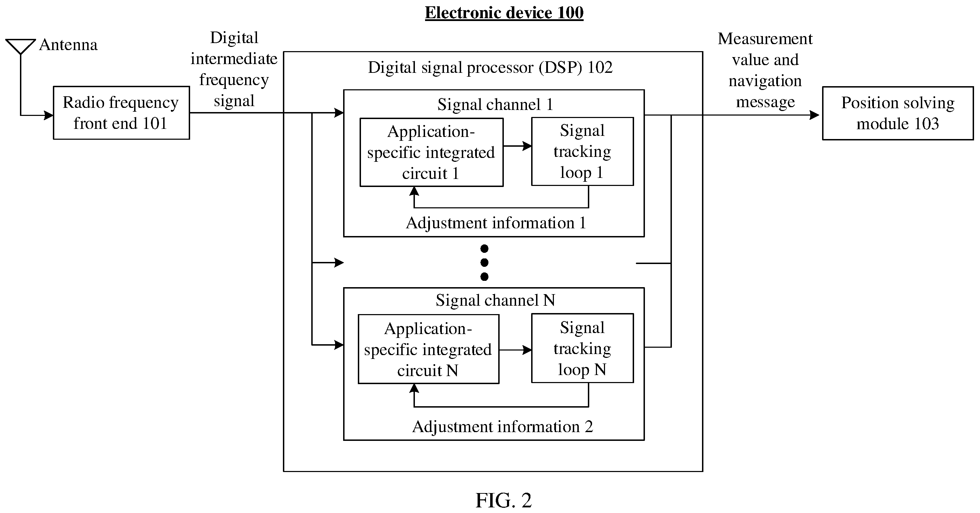

It may be understood that the GNSS receiving module needs to separately perform processing such as independent capturing and tracking on signals of a plurality of GNSS satellites (code types of different satellites are different, and code types of a same satellite corresponding to one or more frequency bands are the same). Therefore, the DSP 102 usually uses a signal channel form, that is, each signal channel captures, tracks, and processes a signal of one satellite. The GNSS receiving module usually needs to provide dozens or hundreds of signal channels to meet requirements for tracking signals of different systems and different satellites. For a specific example, refer to an electronic device 100 shown in FIG. 2. The electronic device 100 shown in FIG. 2 is similar to the electronic device 100 shown in FIG. 1. For descriptions of related modules, refer to the descriptions in FIG. 1.

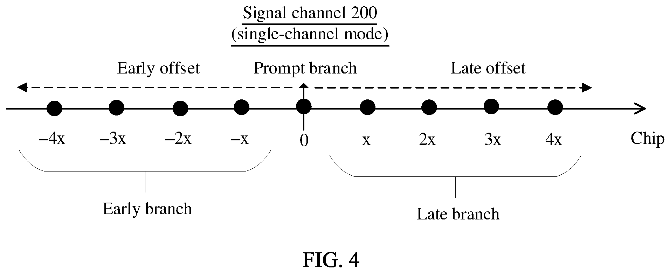

As shown in FIG. 2, the DSP 102 may include N signal channels, where N is a positive integer. Each signal channel can independently occupy one hardware channel. Different hardware channels can run at a high speed in parallel. Each signal channel may include a corresponding ASIC and a corresponding signal tracking loop. For example, a signal channel 1 includes an ASIC 1 and a signal tracking loop 1, and a signal channel N includes an ASIC N and a signal tracking loop N. Each signal channel may include a plurality of correlators, for example, may include one prompt (prompt, P) correlator, one or more early (early, E) correlators, and one or more late (late, L) correlators. Spacings between any two adjacent correlators in one signal channel are equal, for example, 1/2 chip. For a specific structure example, refer to FIG. 4. In this embodiment of this application, the correlator may also be referred to as a branch.

It may be understood that a carrier frequency and a code phase of a GNSS satellite signal received by the electronic device 100 change with time, and these changes are unpredictable. Therefore, the signal tracking loop in the DSP 102 periodically and continuously runs in a closed-circuit feedback form, to continuously lock the GNSS satellite signal. For example, as shown in FIG. 1, the signal tracking loop may send (or may be referred to as feed back) adjustment information to the DSP ASIC, so that a duplicated carrier and a duplicated pseudo-code are consistent with a carrier and a pseudo-code in the received GNSS satellite signal. For example, as shown in FIG. 2, in the signal channel 1 (it is assumed that the signal channel 1 corresponds to a satellite 1), the signal tracking loop 1 may feed back corresponding adjustment information 1 to the ASIC 1, so that a carrier and a pseudo-code duplicated by the signal tracking loop 1 are consistent with a received carrier and a received pseudo-code of the satellite 1. In the signal channel N (it is assumed that the signal channel N corresponds to a satellite N), the signal tracking loop N may feed back corresponding adjustment information N to the ASIC N, so that a carrier and a pseudo-code duplicated by the signal tracking loop N are consistent with a received carrier and a received pseudo-code of the satellite N.

The signal tracking loop in the DSP 102 may include a carrier tracking loop (which may be briefly referred to as a carrier loop) and a code tracking loop (which may be briefly referred to as a code loop). The carrier loop and the code loop are respectively used to track the carrier and the pseudo-code in the GNSS satellite signal. Embodiments of this application mainly relate to a code loop. Therefore, for ease of description, a carrier is stripped by default in related descriptions of the following embodiments.

In any code loop, outputs (which may also be understood as correlation values in different code phases) of a plurality of correlators in a current signal channel need to be obtained each time to calculate adjustment information of the code loop. The adjustment information is, for example, an adjustment quantity of a numerically controlled oscillator (numerically controlled oscillator, NCO). The NCO may be used to duplicate a carrier and/or a bitstream, and the adjustment quantity of the NCO may include a frequency offset adjustment quantity and/or a phase offset adjustment quantity. The adjustment quantity of the NCO may include a carrier NCO adjustment quantity and a pseudo-code NCO adjustment quantity. For example, after a satellite signal captured by the signal channel 1 shown in FIG. 2 enters a code loop of the signal tracking loop 1, output values of a plurality of correlators in the signal channel 1 may be transmitted to a code loop discriminator (not shown) for processing, and then processed by a loop filter (not shown) to obtain a pseudo-code NCO adjustment quantity. The pseudo-code NCO adjustment quantity may be further applied to the signal channel 1 (for example, adjusting a pseudo-code phase duplicated by the current code loop), so that a prompt code duplicated by the code loop is consistent with a received pseudo-code. In addition, the signal channel 1 further outputs a GNSS measurement value to the position solving module 103 for processing. It may be understood that a correlator configuration (for example, a spacing, a branch quantity, and a position of a prompt branch) affects tracking effect of the GNSS satellite signal.

Because signal quality of different satellites is different, to achieve better tracking effect, a correlator configuration may need to be adjusted. However, currently, the correlator configuration is fixed (structures of signal channels shown in FIG. 2 are the same, and are all a structure shown in FIG. 4), and cannot be flexibly adjusted. Although some solutions have been proposed currently, there are still some problems, resulting in low availability. In a solution, a correlator configuration option that may be used subsequently is comprehensively considered at an early stage of a chip design, and the configuration option is implemented and an adjustable instruction is added in a hardware design process. This manner needs to be completed before hardware design. A variable configuration is limited, and no additional variable configuration can be added subsequently. Therefore, this is still inflexible. In another solution, a software method is selected and used to process a digital signal of a GNSS satellite. In a GNSS receiver, an ADC is enabled to digitize a signal at a part as close as possible to the antenna, and then a digital signal is processed by using the software method. Specifically, a correlator part in the DSP ASIC shown in FIG. 1 may be implemented by using software. Therefore, adjustment of the correlator configuration can be implemented by using software. However, this imposes a relatively high requirement on performance of a processor, and causes problems such as an increase in overall power consumption and an increase in costs.

An embodiment of this application provides a configuration method, applied to an electronic device 100. The electronic device 100 may include a GNSS receiving module. The electronic device 100 may control and adjust a configuration of a correlator in the GNSS receiving module in a tracking phase of the GNSS satellite signal. In the electronic device 100 shown in FIG. 1, when it is determined to adjust the correlator configuration, the signal tracking loop in the DSP 102 may send control information (which may also be referred to as indication information) to the DSP ASIC. The control information indicates to adjust the correlator configuration. For example, differentiated correlator configurations may be implemented for different satellites, to achieve better tracking effect.

In an implementation, when the correlator configuration is adjusted, the n signal channels may be used to track a signal of a same GNSS satellite, and comprehensively use outputs of correlators of the n signal channels. This may be referred to a correlator configuration mode being a multi-channel mode, rather than using one signal channel to track the signal of the GNSS satellite and outputs of correlators of only one signal channel (which may be referred to as a correlator configuration mode being a single-channel mode), to achieve effect of adjusting the correlator configuration. Herein, n is a positive integer greater than 1 and less than or equal to N. Therefore, in this embodiment of this application, output results of original correlators can be spliced into required data, to adjust the correlator configuration without modifying the hardware circuit of the DSP. In this way, a satellite signal has higher tracking precision and can better adapt to changes in different scenarios. An adjustment manner is more flexible. In addition, a performance requirement, overall power consumption, and costs of a processor are not increased, and availability is relatively high.

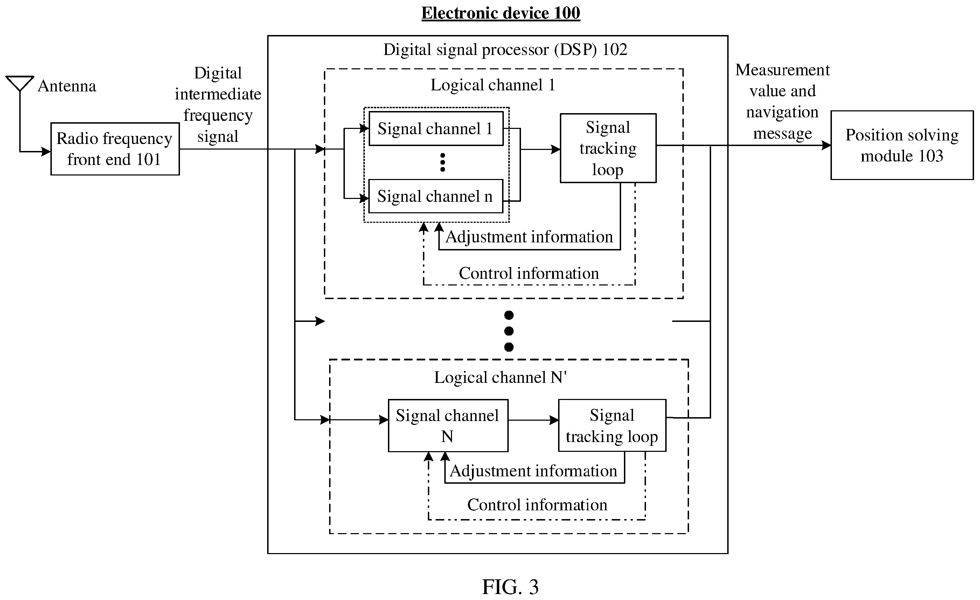

For an example of the single-channel mode, refer to any signal channel of the electronic device 100 shown in FIG. 2. For an example of the multi-channel mode, refer to a logical channel 1 of the electronic device 100 shown in FIG. 3. The single-channel mode is a correlator configuration before any configuration modification, and may also be referred to as an original configuration mode.

The n signal channels may be considered as one logical channel. In this embodiment of this application, it may be understood that the correlators of the n signal channels in the original configuration mode are combined to form a required logical channel, to achieve better tracking effect when a signal of a specific satellite is tracked. The n signal channels may include a primary channel and a secondary channel, for example, one primary channel and (n-1) secondary channels. The secondary channel is entirely shifted by a specific code phase relative to correlators of the primary channel. The n signal channels in the logical channel may share same adjustment information (that is, a carrier NCO adjustment quantity and a pseudo-code NCO adjustment quantity), to ensure that update of a tracking loop of the n signal channels is fully synchronized. The pseudo-code NCO adjustment quantity may be used to adjust a pseudo-code phase of a current logical channel, and the carrier NCO adjustment quantity may be used to adjust a carrier phase/frequency offset of the current logical channel.

FIG. 3 is a diagram of a structure of another example of an electronic device 100. The electronic device 100 shown in FIG. 3 is similar to the electronic device 100 shown in FIG. 1. For descriptions of related modules, refer to the descriptions in FIG. 1.

As shown in FIG. 3, the electronic device 100 may include N signal channels, where N is a positive integer. The N signal channels may form $N'$ logical channels, where $N'$ is a positive integer less than or equal to N. Any logical channel may include one or more signal channels and a corresponding signal tracking loop. For example, a correlator configuration of a logical channel 1 is in a multi-channel mode, the logical channel 1 includes n signal channels (that is, a signal channel 1 to a signal channel n) and one signal tracking loop. A code phase offset exists between prompt correlators of any two signal channels in the n signal channels, and outputs of correlators of the n signal channels form outputs of the correlators of the logical channel 1. For example, a correlator configuration of a logical channel $N'$ is in a single-channel mode, and the logical channel $N'$ includes a signal channel N and a signal tracking loop. It may be understood that the logical channel $N'$ shown in FIG. 3 is the signal channel N shown in FIG. 2.

In an implementation, in each logical channel, a signal tracking loop in the current logical channel may feed back same adjustment information to a signal channel in the current logical channel. For example, in a logical channel 1 in the multi-channel mode, the signal tracking loop may feed back same adjustment information to a signal channel 1 to a signal channel n. Therefore, each signal channel in the signal channel 1 to the signal channel n may adjust a pseudo-code phase and a carrier phase/a frequency offset based on the adjustment information. For example, in the logical channel $N'$ in the single-channel mode, the signal tracking loop may feed back adjustment information to the signal channel N. Therefore, the signal channel N may adjust a pseudo-code phase and a carrier phase/a frequency offset based on the adjustment information.

In some examples, when the correlator configuration of the logical channel 1 is in the multi-channel mode, the logical channel 1 is used to track signals of a same satellite. In this embodiment of this application, the signals of the same satellite may be satellite signals with a same constellation, a same frequency, and a same pseudo-code type. Specifically, in the logical channel 1, the n signal channels (that is, the signal channel 1 to the signal channel n) are used to track a signal of a same satellite; a code tracking loop in the signal tracking loop is used to receive a first satellite signal captured by the n signal channels; the code tracking loop is further used to obtain first code loop adjustment information (that is, a pseudo-code NCO adjustment quantity) based on output values of correlators of the n signal channels, and feed back the first code loop adjustment information to the n signal channels; and the code tracking loop is further used to output an observation quantity of the first satellite signal to the position solving module 103, so that the position solving module obtains position information of the electronic device 100 based on the observation quantity of the first satellite signal. For example, after a satellite signal captured by the n signal channels enters the code tracking loop in the signal tracking loop in the logical channel 1, output values of a plurality of correlators in the n signal channels may be transmitted to a code loop discriminator (not shown) for processing, and then processed by a loop filter (not shown) to obtain a pseudo-code NCO adjustment quantity. The pseudo-code NCO adjustment quantity may be further applied to the n signal channels (for example, adjusting a pseudo-code phase duplicated by the code tracking loop of the logical channel 1), so that a prompt code duplicated by the code tracking loop in the logical channel 1 is consistent with a received pseudo-code.

In addition, a carrier tracking loop in the signal tracking loop receives the first satellite signal captured by the n signal channels, obtains first carrier loop adjustment information (that is, a carrier NCO adjustment quantity) based on the output values of the correlators of the n signal channels, and feed back the first carrier loop adjustment information to the n signal channels; and the carrier tracking loop is further used to output the observation quantity of the first satellite signal to the position solving module 103, so that the position solving module 103 obtains the position information of the electronic device 100 based on the observation quantity of the first satellite signal.

In an implementation, if the multi-channel mode needs to be implemented, for example, the n signal channels (that is, the signal channel 1 to the signal channel n) shown in FIG. 2 need to be configured as the logical channel 1 shown in FIG. 3, the electronic device 100 may configure tracking parameters of the n signal channels. Optionally, the tracking parameters include an identifier of a tracked satellite. The electronic device 100 may configure the tracking parameters of the n signal channels to all include an identifier of a satellite 1. In this way, the n signal channels track a signal of the same satellite 1. Optionally, the tracking parameter includes an identifier of a signal tracking loop that receives an output value of a correlator. The electronic device 100 may configure the tracking parameters of the n signal channels to all include an identifier of the signal tracking loop in the logical channel 1, so that the n signal channels input the output values of the correlators to the same signal tracking loop.

In an implementation, in each logical channel, a signal tracking loop in the current logical channel may feed back control information to a signal channel in the current logical channel, to adjust a correlator configuration of the logical channel. For example, in the logical channel 1 in the multi-channel mode, the signal tracking loop may feed back control information to the signal channel 1 to the signal channel n. Therefore, each signal channel in the signal channel 1 to the signal channel n may adjust a tracking parameter of the signal channel based on the received control information, for example, adjust a tracked satellite and a signal tracking loop receiving output values of correlators. For example, in the logical channel N' in the single-channel mode, the signal tracking loop may feed back control information to the signal channel N, so that the signal channel N adjusts a tracking parameter of the signal channel N based on the control information. Control information received by any two signal channels in the logical channel 1 may be the same or different. Control information received by signal channels in the logical channel 1 and the logical channel N may be the same or different. For example, after the correlator configuration is adjusted, n1 signal channels in the logical channel 1 and the signal channel N in the logical channel N are allocated to one logical channel, and n2 signal channels in the logical channel 1 are allocated to one logical channel, where n1+n2=n. Control information of the n1 signal channels and the signal channel N may be the same. In this way, the n1 signal channels and the signal channel N are used to track a signal of a same satellite, and input output values of correlators to a same signal tracking loop. Similarly, control information of the n2 signal channels may be the same.

The following describes a correlator configuration and an adjustment manner in embodiments of this application by using an example. For ease of description, the following embodiment is described by using an example in which a correlator spacing is x and a branch quantity is m in the single-channel mode, and a correlator spacing is x' and a branch quantity is m' in the multi-channel mode.

FIG. 4 is a diagram of an example of a signal channel 200 in a single-channel mode. FIG. 4 is described by using an example in which a branch quantity m is equal to 9. A horizontal axis shown in FIG. 4 is a chip axis.

As shown in FIG. 4, a signal channel 200 includes nine branches (that is, nine correlators): one prompt branch, four early branches, and four late branches. A spacing between any two adjacent branches is x chips. Therefore, the correlator spacing shown in FIG. 4 may be briefly referred to as an equal spacing x. The prompt branch is located in the middle of the nine branches, and a chip of the prompt branch is 0. The early branch has an early offset relative to the prompt branch. The early branches may be sequentially sorted based on magnitudes of early offsets as follows: an early branch whose chip is -x, an early branch whose chip is -2x, an early branch whose chip is -3x, and an early branch whose chip is -4x. The late branch has a late offset relative to the prompt branch. The late branches may be sequentially sorted based on magnitudes of late offsets as follows: a late branch whose chip is x, a late branch whose chip is 2x, a late branch whose chip is 3x, and a late branch whose chip is 4x.

It should be noted that a chip of a correlator/branch in this embodiment of this application is not an actual code phase, but a relative chip/chip offset obtained by comparing the chip with a pseudo-code phase duplicated by a current code tracking loop. For example, the chip of the prompt branch is 0, to indicate that no offset exists between the code phase of the prompt branch and the pseudo-code phase duplicated by the current code tracking loop. In other words, the pseudo-code phase duplicated by the current code tracking loop is the code phase of the prompt branch. For example, the chip of the early branch is -x, to indicate that an early offset -x exists between a code phase of the early branch and the pseudo-code phase duplicated by the current code tracking loop.

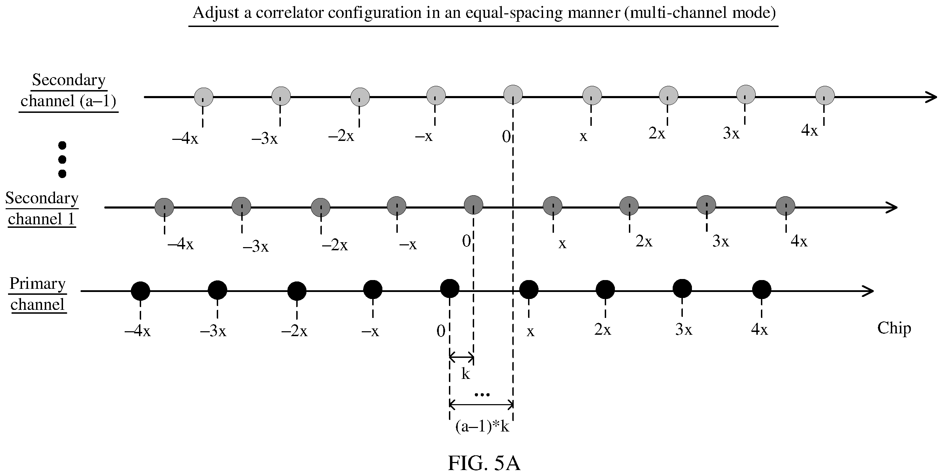

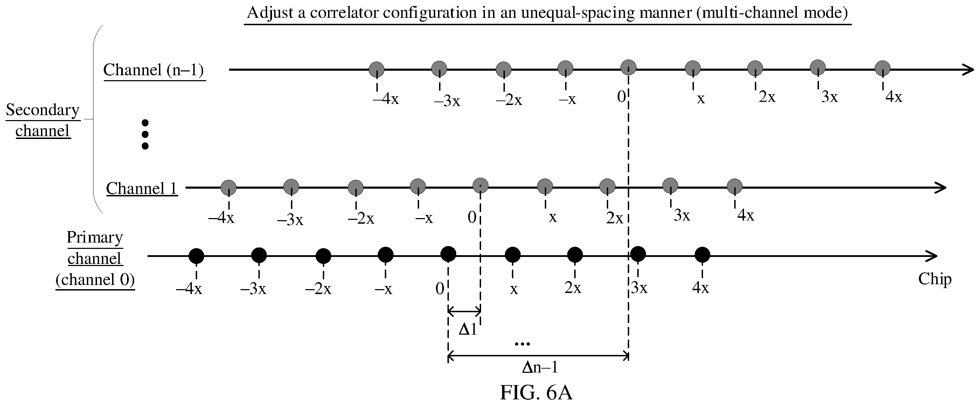

In this embodiment of this application, the single-channel mode shown in FIG. 4 may be adjusted to the correlator configuration of the multi-channel mode. For example, adjustment is performed in an equal-spacing manner shown in FIG. 5A to FIG. 5C, and adjustment is performed in an unequal-spacing manner shown in FIG. 6A to FIG. 6C.

First, a related definition in a process of adjusting the correlator configuration is described. If a rational factor of a rational number s is t, there is an integer o enabling $o \times t = s$. When a maximum rational common factor of a rational number s and a rational number r is denoted as $GCD(s, r) = t$, there are minimum integers u and v enabling $u \times t = s$, and $v \times t = r$. For example,

$$GCD\left(\frac{1}{3},\frac{1}{4}\right) = \frac{1}{12}, \quad GCD\left(\frac{1}{2},\frac{1}{4}\right) = \frac{1}{4} \quad , \quad \text{and}$$

$$GCD\left(\frac{5}{4}, 1\right) = \frac{1}{4}.$$

FIG. 5A is a diagram of an example of adjusting a correlator configuration in an equal-spacing manner.

It is assumed that a mode of the correlator configuration needs to be adjusted from the single-channel mode (one signal channel, an equal spacing x, and a branch quantity m is equal to 9) to the multi-channel mode (a plurality of signal channels, an equal spacing x', and a branch quantity m'). An adjustment process may include but is not limited to the following steps:

First, obtain a maximum rational common factor of x and x': $GCD(x,x') = k,$ and integers a and b exist to enable $a \times k = x$ and $b \times k = x'$.

Second, one signal channel is used as a primary channel, and (a-1) signal channels are used as secondary channels. The a (in this case, n=a) channels track a signal of a same satellite. For a structure of each signal channel, refer to the structure shown in FIG. 4. The primary channel is not shifted, and a $d^{th}$ secondary channel in the (a-1) secondary channels is shifted based on $d \times k$ chips, where d is a positive integer less than a. As shown in FIG. 5A, a secondary channel 1 is shifted by $1 \times k$ relative to the primary channel, and a secondary channel 2 (not shown) is shifted by $2 \times k$ relative to the primary channel. Shifting is sequentially performed by analogy according to this rule. A secondary channel (a-1) is shifted by $(a - 1) \times k$ relative to the primary channel.

Third, values of required correlators are captured based on a spacing x', to form at most $(1 + \left\lfloor \frac{a \cdot m}{b} \right\rfloor)$ correlators with an equal spacing x', where $\lfloor \cdot \rfloor$ represents rounding down.

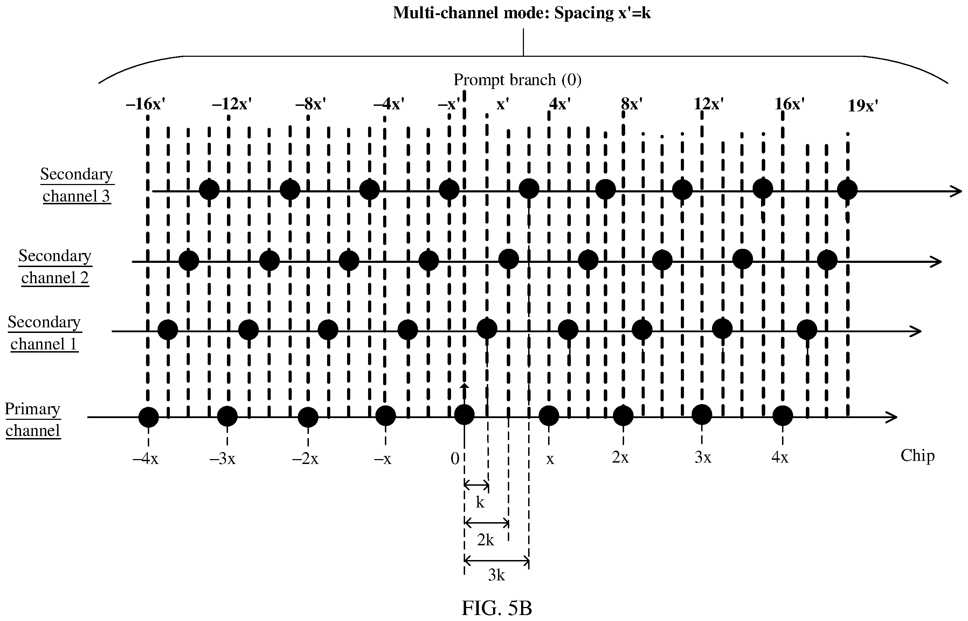

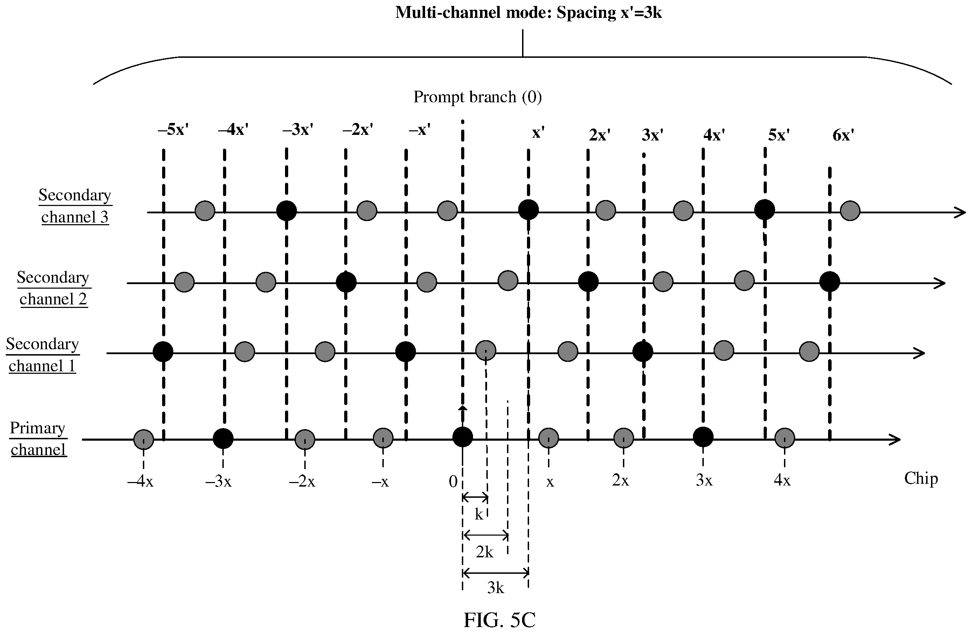

FIG. 5B and FIG. 5C are diagrams of examples of some correlator configurations in a multi-channel mode. FIG. 5B and FIG. 5C are described by using an example in which the multi-channel mode is obtained through adjustment in the equal-spacing manner shown in FIG. 5A. FIG. 5B and FIG. 5C are illustrated by using an example in which n=a=4, that is, there are four signal channels in the multi-channel mode.

FIG. 5B is illustrated by using an example in which x' = k. As shown in FIG. 5B, in the multi-channel mode, there may be m' = 36 branches (that is, 36 correlators). There are one prompt branch (a chip is 0), 16 early branches (chips are sequentially from -x' to -16x'), and 19 late branches (chips are sequentially from x' to 19x'). A spacing between any two adjacent branches is x'.

FIG. 5C is illustrated by using an example in which x' = 3 × k. As shown in FIG. 5C, in the multi-channel mode, there may be m' = 12 branches (that is, 12 correlators). There are one prompt branch (a chip is 0), 5 early branches (chips are sequentially from -x' to -5x'), and 6 late branches (chips are sequentially from x' to 6x'). A spacing between any two adjacent branches is x'.

It can be learned that a spacing in the correlator configuration shown in FIG. 5B is relatively small, that is, granularity is relatively fine; and a spacing in the correlator configuration shown in FIG. 5C is relatively large, that is, granularity is relatively coarse.

FIG. 6A is a diagram of an example of adjusting a correlator configuration in an unequal-spacing manner.

It is assumed that a mode of the correlator configuration needs to be adjusted from the single-channel mode (one signal channel, an equal spacing x, and a branch quantity m is equal to 9) to the multi-channel mode (n signal channels, a spacing $\vec{x}$, and a branch quantity m'). The n signal channels track a signal of a same satellite. For a structure of each signal channel, refer to the structure shown in FIG. 4.

As shown in FIG. 6A, numbers of the n signal channels are sequentially 0, 1, ..., and (n-1), where a channel whose number is 0 is a primary channel, and a channel whose number is a positive integer less than n (that is, an integer in a range from 1 to (n-1)) is a secondary channel. An expression of an offset $\vec{\Delta}$ of each of the n signal channels relative to the primary channel is as follows:

$$\vec{\Delta} = [\Delta_i]^T, i = 0, 1, \dots, (n - 1)$$

Herein, i is an integer greater than or equal to 0 and less than n, $\Delta_i$ is an offset, relative to the primary channel (whose number is 0), of a signal channel whose number is i (which may be briefly referred to as a channel i), and $\Delta_0 = 0$.

As shown in FIG. 6A, an offset of a channel 1 relative to the primary channel is $\Delta_1$, and an offset of a channel 2 (not shown) relative to the primary channel is $\Delta_2$. By analogy, an offset of a channel (n-1) relative to the primary channel is $\Delta_{n-1}$. Therefore, $\vec{\Delta}$ may also be represented by using the following formula:

$$\vec{\Delta} = [0 \ \Delta_1 \ \Delta_2 \ \dots \ \Delta_{n-1}]^T$$

Then, values of required correlators may be captured based on a target spacing $\vec{x}$, that is, values of required m' correlators are extracted from values of $(n \times m)$ correlators. An expression of $\vec{x}$ is as follows:

$$\vec{x} = [x'_j]^T, j = 1, \dots, (m' - 1)$$

Herein, $x'_j$ is a chip spacing between a jth correlator and a $(j+1)^{th}$ correlator. For example, a chip spacing between a $1^{st}$ correlator and a $2^{nd}$ correlator is $x'_1$, a chip spacing between the $2^{nd}$ correlator and a $3^{rd}$ correlator is $x'_2$, and so on. A chip spacing between an $(m' - 1)^{th}$ correlator and an $m'^{th}$ correlator is $x'_{m'-1}$. Therefore, $\vec{x}$ may also be identified as the following formula:

$$\vec{x} = [x'_1 \ x'_2 \ \dots \ x'_{m'-1}]^T$$

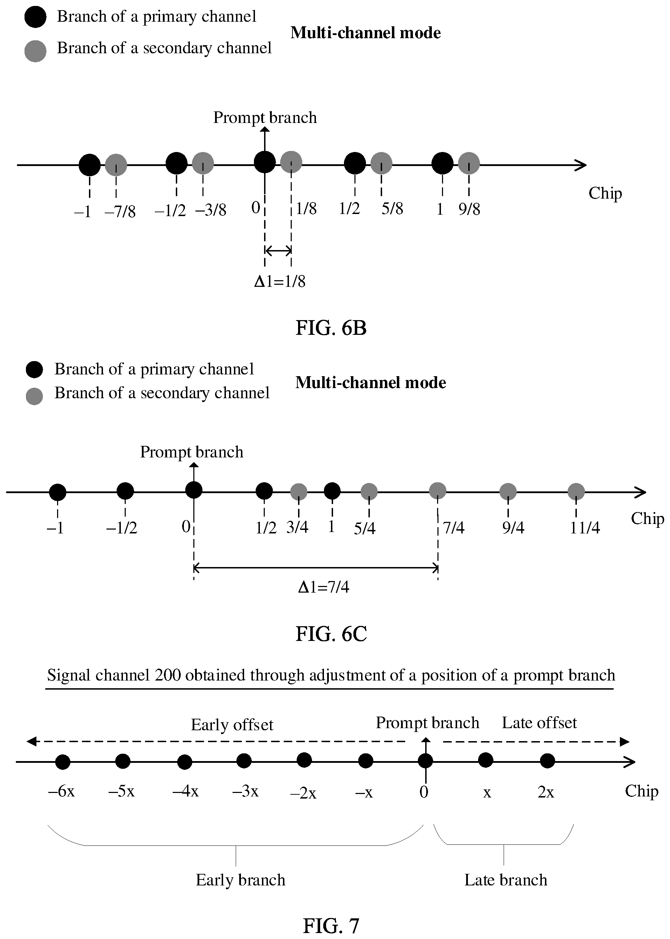

FIG. 6B and FIG. 6C are diagrams of examples of other correlator configurations in a multi-channel mode. FIG. 6B and FIG. 6C are described by using an example in which the multi-channel mode is obtained through adjustment in the unequal-spacing manner shown in FIG. 6A. FIG. 6B and FIG. 6C are illustrated by using an example in which x=1/2, m=5, and n=2. To be specific, two signal channels exist in the multi-channel mode; and in each signal channel, a correlator spacing is 1/2 chip, and a branch quantity is 5.

FIG. 6B is illustrated by using an example in

which $\vec{\Delta} = \begin{bmatrix} 0 & \frac{1}{8} \end{bmatrix}^T$. As shown in FIG. 6B, in the multi-channel mode, there may be $m' = 10$ branches (that is, 10 correlators). There are one prompt branch (a chip is 0), four early branches (chips are: -3/8, -1/2, -7/8, and -1 in descending order), and five late branches (chips are: 1/8, 1/2, 5/8, 1, and 9/8 in ascending order). A current correlator span (also referred to as a range) is -1 to 9/8. An expression of a current spacing $\vec{x'r}$ (j is 9) is as follows:

$$\vec{x'} = \begin{bmatrix} x'_j \end{bmatrix}^T = \begin{bmatrix} \frac{1}{8} & \frac{3}{8} & \frac{1}{8} & \frac{3}{8} & \frac{1}{8} & \frac{3}{8} & \frac{1}{8} & \frac{3}{8} & \frac{1}{8} \end{bmatrix}^T$$

FIG. 6C is illustrated by using an example in which $\vec{\Delta} = \begin{bmatrix} 0 & \frac{7}{4} \end{bmatrix}^T$. As shown in FIG. 6C, in the multi-channel mode, there may be $m' = 10$ branches (that is, 10 correlators). There are one prompt branch (a chip is 0), two early branches (chips are: -1/2 and -1), and seven late branches (chips are: 1/2, 3/4, 1, 5/4, 7/4, 9/4, and 11/4 in ascending order). A current correlator span is -1 to 11/4. An expression of a current spacing $\vec{x'}$ (j is 9) is as follows:

$$\vec{x'} = \begin{bmatrix} x'_j \end{bmatrix}^T = \begin{bmatrix} \frac{1}{2} & \frac{1}{2} & \frac{1}{2} & \frac{1}{4} & \frac{1}{4} & \frac{1}{4} & \frac{1}{2} & \frac{1}{2} & \frac{1}{2} \end{bmatrix}^T$$

It can be learned that a span in the correlator configuration shown in FIG. 6B is relatively small, which may also be referred to as a relatively small correlator range; and a span in the correlator configuration shown in FIG. 6C is relatively large, which may also be referred to as a relatively large correlator range.

In an implementation, when the correlator configuration is adjusted, a position of the prompt branch may be further adjusted. For example, after adjustment to the multi-channel mode is performed in the manner shown in FIG. 5A or FIG. 6A, the position of the prompt branch is adjusted. For another example, after n signal channels are selected to track a signal of a same satellite (the secondary channels may not be shifted), the position of the prompt branch is adjusted.

For ease of description, an expression of each chip offset $\vec{c}$ in the single-channel mode/multi-channel mode is as follows:

$$\vec{c} = \begin{bmatrix} c_y \end{bmatrix}^T, y = 1, 2, \dots, m'$$

Herein, $c_y$ is an offset value (for example, an early offset or a late offset) of a $y^{th}$ correlator (that is, a $y^{th}$ branch), and a unit is a chip. An offset value of the prompt branch may be represented as $c_p$.

In some examples, the position of the prompt branch may be in the middle, and the offset value of the prompt branch satisfies $c_p = c_{\left\lceil \frac{1+m'}{2} \right\rceil} = 0$. It may be understood as symmetrical distribution. For example, as shown in FIG. 4, the offset of the signal channel 200 satisfies $\vec{c} = [c_y]^T = [-4x \ -3x \ -2x \ -x \ 0 \ x \ 2x \ 3x \ 4x]^T$. The prompt branch is located in the middle. The offset value satisfies $c_p = c_5 = 0$. Branches with negative offsets are early branches (four in total), and branches with positive offsets are late branches (four in total).

In some other examples, the position of the prompt branch may not be in the middle, and the offset value of the prompt branch satisfies $c_p \neq c_{\left\lceil \frac{1+m'}{2} \right\rceil}$. It may be understood as asymmetric distribution. For example, FIG. 7 shows an example of a signal channel 200 after the position of the prompt branch is adjusted. The offset of the signal channel 200 shown in FIG. 7 satisfies $\vec{c} = [c_y]^T = [-6x \ -5x \ -4x \ -3x \ -2x \ -x \ 0 \ x \ 2x]^T$. The prompt branch is not located in the middle, but is located on a rear side. The offset value satisfies $c_p = c_7 = 0$. Branches with negative offsets are early branches (six in total), and branches with positive offsets are late branches (two in total).

It can be learned that more branches are arranged by early chip offsets (that is, a proportion of the early branches is larger) in the correlator configuration shown in FIG. 7 in comparison with the correlator configuration shown in FIG. 4. This may be understood as more attention to energy of an early part. In this way, a problem existing in a multipath scenario can be effectively resolved. Tracking of a non-line-of-sight (non-line-of-sight, NLOS) signal cannot be switched to tracking of a line-of-sight (line-of-sight, LOS) signal. In other words, even if the tracking loop accidentally tracks down an NLOS signal, if a peak value is identified on the early branch, that is, existence of a LOS peak is identified in the early part, the tracking loop may switch to track a LOS signal, thereby achieving better anti-multipath effect.

The LOS signal is a signal that is not blocked and that is directly propagated from a satellite to a GNSS receiver/GNSS receiving module. However, in some environments (for example, buildings are dense in an urban environment), a GNSS satellite signal is severely affected by multipath effect, and the GNSS receiver/GNSS receiving module may receive a GNSS satellite signal affected by reflection or the like. This signal may be referred to as an NLOS signal. This scenario may be referred to as a multipath scenario. Therefore, to improve GNSS positioning precision, an anti-multipath interference manner such as NLOS signal processing needs to be performed.

In an implementation, the multi-channel mode may include a first mode and a second mode. A correlator span (which may also be referred to as a correlator range) in the first mode is less than a correlator span in the second mode, and/or a correlator spacing in the first mode is less than a correlator spacing in the second mode. In some examples, the correlator span in the first mode is less than or equal to a preset span 1, and the correlator span in the second mode is greater than a preset span 2; and/or the correlator spacing in the first mode is less than or equal to a preset spacing 1, and the correlator spacing in the second mode is greater than a preset spacing 2. The preset span 1 is less than or equal to the preset span 2, and the preset spacing 1 is less than or equal to the preset spacing 2. For example, the preset span 1 and the preset span 2 are equal and are a correlator span in the single-channel mode, the preset spacing 1 and the preset spacing 2 are equal and are a correlator spacing in the single-channel mode. A correlator in the first mode may search for a correlation peak in a smaller range and/or at finer granularity, and may identify a finer correlator energy peak deviation (such as, a multipath error); and a correlator in the second mode may search for a correlation peak in a larger range and/or at coarser granularity, and may search for a LOS peak in a larger range. The two modes may be applied in different scenarios, to effectively improve tracking resolution and tracking precision and robustness. For example, in a harsh environment, the first mode is used when a multipath signal is relatively close to a main signal, and the second mode is used when a multipath signal is relatively distant from a main signal.

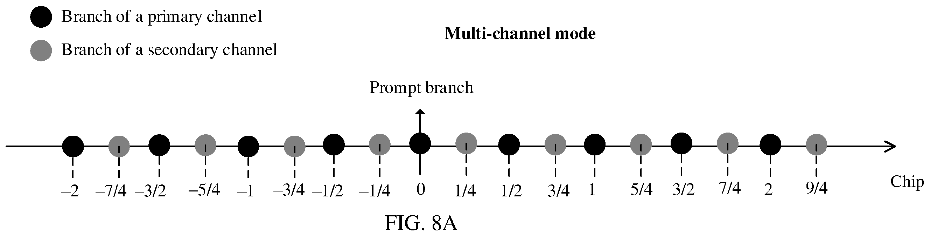

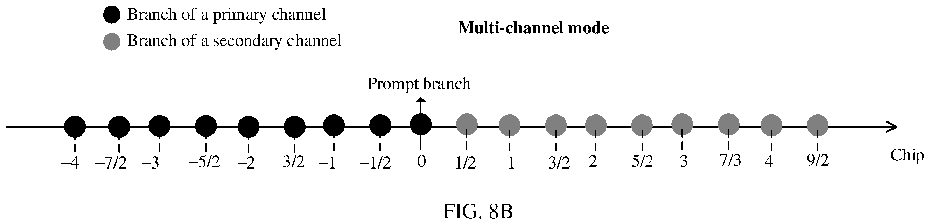

In some examples, the first mode and the second mode may be implemented by adjusting $x'$ shown in FIG. 5A, the correlator configuration of the first mode is the configuration shown in FIG. 5B, and the correlator configuration of the second mode is the configuration shown in FIG. 5C. In some other examples, the first mode and the second mode may be implemented by adjusting $\vec{\Delta}$ shown in FIG. 6A, the correlator configuration of the first mode is the configuration shown in FIG. 6B, and the correlator configuration of the second mode is the configuration shown in FIG. 6C. The foregoing example is described by using an example in which the first mode and the second mode are implemented in a same adjustment manner. In specific implementation, the first mode and the second mode may alternatively be implemented in different adjustment manners. For examples of the first mode and the second mode, refer to FIG. 8A and FIG. 8B below.

FIG. 8A and FIG. 8B are diagrams of examples of some correlator configurations in a multi-channel mode. FIG. 8A and FIG. 8B are illustrated by using an example in which x=1/2, m=9, and n=2. To be specific, two signal channels (that is, a primary channel and a secondary channel) are included in the multi-channel mode. In addition, in each signal channel, a correlator spacing is 1/2, and a branch quantity is 9.

FIG. 8A is a diagram of an example of a correlator configuration in a first mode.

FIG. 8A is described by using an example in which the multi-channel mode is obtained through adjustment in the equal-spacing manner shown in FIG. 5A. As shown in FIG. 8A, code phases of secondary channels are all shifted by k=1/4 chip relative to a primary channel, and $m'$ = 18 branches currently exist and include one prompt branch (a chip is 0), eight early branches (chips are sequentially from -2 to -1/4), and nine late branches (chips are sequentially from 1/4 to 9/4). A spacing between any two adjacent branches is $x'$ = 1/4. A current correlator span is -2 to 9/4.

FIG. 8B is a diagram of an example of a correlator configuration in a second mode.

FIG. 8B is described by using an example in which a position of a prompt branch in the correlator configuration is adjusted to obtain the multi-channel mode. As shown in FIG. 8B, a code phase of a prompt branch of a primary channel is shifted by -2 chips, and code phases of prompt branches of secondary channels are all shifted by 9/4 chips. Currently, $m'$ = 18 branches exist. There is one prompt branch (a chip is 0), eight early branches (chips are sequentially from - 4 to -1/2), and nine late branches (chips are sequentially from 1/2 to 9/2). A spacing between any two adjacent branches is $x'$ = 1/2. A current correlator span is -4 to 9/2.

In the correlator configurations shown in FIG. 8A and FIG. 8B, a correlator span shown in FIG. 8A is smaller, a correlator span shown in FIG. 8B is larger, a correlator spacing shown in FIG. 8A is smaller, and a correlator spacing shown in FIG. 8B is smaller.

In an implementation, the multi-channel mode may include a third mode and a fourth mode. A proportion of early branches in the third mode is less than a proportion of early branches in the fourth mode. It may be understood that the fourth mode pays more attention on energy of an early part.

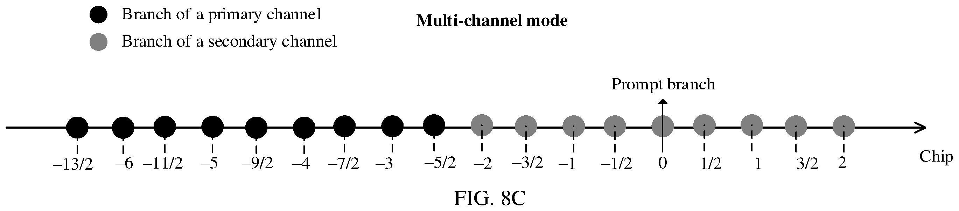

In some examples, the correlator configuration of the second mode is used as an example basis for description. For the correlator configuration of the third mode, refer to FIG. 8B (in this case, the third mode is the second mode). For the correlator configuration of the fourth mode, refer to FIG. 8C. FIG. 8B has been described above. As shown in FIG. 8C, a code phase of a prompt branch of a primary channel is shifted by -9/2 chips, and code phases of prompt branches of secondary channels are all not shifted. Currently, $m'$ = 18 branches exist. There is one prompt branch (a chip is 0), 13 early branches (chips are sequentially from -13/2 to -1/2), and four late branches (chips are sequentially from 1/2 to 2). A spacing between any two adjacent branches is $x'$ = 1/2. A current correlator span is -13/2 to 2. In the correlator configurations shown in FIG. 8B and FIG. 8C, quantities $m'$ of branches are equal, spacings $x'$ are equal, and absolute values of correlator spans are also equal (both are 17/2). However, positions of prompt branches are different, and correspondingly, quantities of early branches are different and quantities of late branches are also different. In the correlator configuration shown in FIG. 8B, if the position of the prompt branch is in the middle, an offset value of the prompt branch satisfies $c_p = c_9 = 0$, and correspondingly, a proportion of the early branches is relatively small. In the correlator configuration shown in FIG. 8C, if the position of the prompt branch is not in the middle, but is located on a rear side. FIG. 8C is described by using the offset value $c_p = c_{14} = 0$ of the prompt branch as an example. Correspondingly, a proportion of the early branches is relatively large. In other words, more attention is paid to energy of the early part.

The foregoing embodiment shows the first mode, the second mode (that is, the third mode), and the fourth mode. In specific implementation, there may be another multi-channel mode. For example, the third mode and the fourth mode may be obtained based on the correlator configuration of the first mode. In this case, the third mode may be the first mode (the position of the prompt branch is in the middle). Compared with the position of the prompt branch in the first mode, the position of the prompt branch in the fourth mode is more rear. A specific type of the multi-channel mode is not limited in this embodiment of this application.

The following describes a configuration method in embodiments of this application. The method may be applied to the electronic device 100/the DSP 102 shown in FIG. 1. The method may also be applied to the electronic device 100/the DSP 102 shown in FIG. 2. The method may be applied to the electronic device 100/the DSP 102 shown in FIG. 3. The electronic device 100/the DSP 102 configured to perform the configuration method in embodiments of this application may include N signal channels and a code tracking loop.

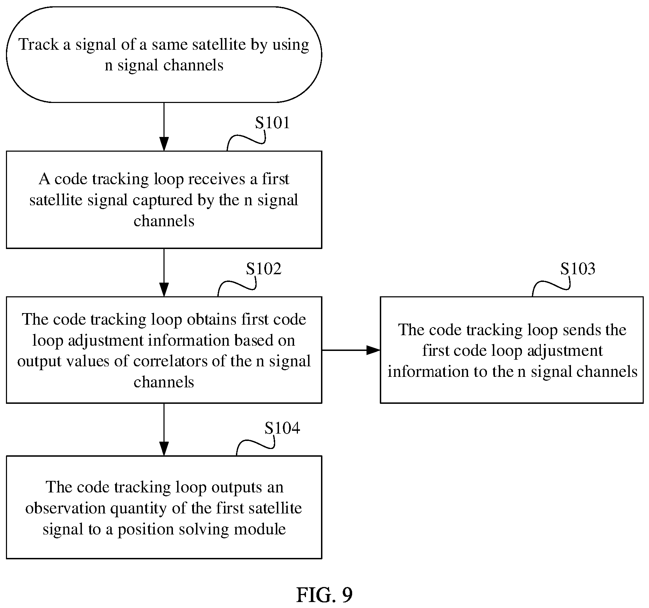

FIG. 9 is a schematic flowchart of a configuration method according to an embodiment of this application. The method may include but is not limited to the following steps.

S101: A code tracking loop receives a first satellite signal captured by n signal channels.

In an implementation, the N signal channels include the n signal channels, and a signal of a same satellite may be tracked by using the n signal channels. In other words, a correlator configuration of the n signal channels is in the multi-channel mode.

In an implementation, the code tracking loop and the n signal channels may form a logical channel. For example, the logical channel 1 shown in FIG. 3 includes n signal channels and one signal tracking loop (including a code tracking loop). The logical channel can be used to track a signal of a same satellite.

S102: The code tracking loop obtains first code loop adjustment information based on output values of correlators of the n signal channels.

Based on the foregoing description, it may be learned that any signal channel may include m correlators (that is, a branch quantity is m), and a spacing is x. For an example of a specific structure, refer to the signal channel 200 shown in FIG. 4. When the correlator configuration of the n signal channels is in the multi-channel mode, a quantity of correlators (that is, a branch quantity) is $m'$, and a spacing is $x'/x_j'$ ($x'$ in an equal-spacing case, and $x_j'$ in a non-equal-spacing case). For configuration examples of the n signal channels in the multi-channel mode, refer to the multi-channel modes in the equal-spacing cases shown in FIG. 5B, FIG. 5C, FIG. 8A, FIG. 8B, and FIG. 8C, and the multi-channel modes in the unequal-spacing cases shown in FIG. 6B and FIG. 6C.

In an implementation, the output values that are of the correlators of the n signal channels and that are used by the code tracking loop may be output values of some or all of $n \times m$ correlators of the n signal channels, that is, output values of the $m'$ correlators. In some examples, the correlator configuration of the n signal channels is in the multi-channel mode shown in FIG. 8A. In this case, n=2, the branch quantity satisfies $m' = 18$, and the code tracking loop may obtain the first code loop adjustment information based on output values of 18 correlators shown in FIG. 8A.

In an implementation, the first code loop adjustment information may include: an estimated pseudo-code phase (which may be briefly referred to as an estimated peak value) of the first satellite signal, and a difference (which may be briefly referred to as an estimated difference value) between a pseudo-code phase of a current logical channel and the estimated peak value. The code tracking loop may estimate the pseudo-code phase of the first satellite signal based on the output values of the correlators of the n signal channels and optional historical information. For an example of the historical information, refer to the description of the historical information in S205.

In an implementation, the code tracking loop may use a preset discriminator, use the output values of the correlators of the n signal channels as inputs of the discriminator, and obtain an output (that is, the first code loop adjustment information) of the discriminator. For example, the preset discriminator is a double-difference discriminator.

S103: The code tracking loop sends the first code loop adjustment information to the n signal channels.

In an implementation, the first code loop adjustment information is a pseudo-code NCO adjustment quantity, and the pseudo-code NCO adjustment quantity is used to adjust the pseudo-code phase of the current logical channel (including the foregoing n signal channels) (for example, including adjusting a pseudo-code phase of a prompt branch). For example, the estimated difference in the first code loop adjustment information is used as an adjustment quantity of the pseudo-code phase of the current logical channel, so that the pseudo-code phase of the prompt branch is consistent with the pseudo-code phase of the received first satellite signal. In some examples, each of the n signal channels may use same first code loop adjustment information. To be specific, each signal channel may adjust a pseudo-code phase of the signal channel based on the first code loop adjustment information.

In an implementation, the electronic device further includes a carrier tracking loop. The carrier tracking loop may also receive the first satellite signal captured by the n signal channels, obtain the first carrier loop adjustment information based on the output values of the correlators of the n signal channels, and send the first carrier loop adjustment information to the n signal channels. The first carrier loop adjustment information is a carrier NCO adjustment quantity. The carrier NCO adjustment quantity is used to adjust a carrier phase/frequency offset of the current logical channel. In some examples, each of the n signal channels may use same first carrier loop adjustment information. To be specific, each signal channel may adjust a carrier phase/frequency offset of the signal channel based on the first carrier loop adjustment information.

S104: The code tracking loop outputs an observation quantity of the first satellite signal to a position solving module.

In an implementation, the code tracking loop may obtain the observation quantity of the first satellite signal based on the output values of the correlators of the n signal channels. The observation quantity of the first satellite signal is used to obtain position information of the electronic device 100/the DSP 102 by using the position solving module.

It may be understood that the code tracking loop is closed-circuit feedback. Therefore, S102 and S103 may be cyclically performed a plurality of times, but the first code loop adjustment information obtained each time S102 and S103 are performed may be different. S104 may be understood as a branch operation led out from a cycle of S102 and S103. The first code loop adjustment information used in S104 may be first code loop adjustment information obtained by performing one of a plurality of times of cyclic execution. For example, the method shown in FIG. 9 is applied to the electronic device 100/the DSP 102 shown in FIG. 3. The n signal channels in FIG. 9 belong to a logical channel 1. The code tracking loop in FIG. 9 belongs to a signal tracking loop in the logical channel 1. The first code loop adjustment information shown in FIG. 9 corresponds to adjustment information sent by the signal tracking loop in the logical channel 1 to the n signal channels.

In the method shown in FIG. 9, the signal tracking loop in a software form may track a signal of a same satellite by using the n signal channels, and comprehensively use the output values of the correlators of the n signal channels instead of only one signal channel to track a signal of one satellite, to achieve effect of adjusting a correlator configuration. For example, for different satellites, n may be different, to implement differentiated correlator configurations for different satellites, thereby achieving better tracking effect. It may be understood that output results of original correlators are spliced into required data to achieve equivalent extension effect, so that the correlator configuration can be adjusted without modifying a correlator hardware configuration (for example, the correlator spacing and the branch quantity of the signal channel 200 shown in FIG. 4). In this way, a satellite signal has higher tracking precision and can better adapt to changes in different scenarios. An adjustment manner is more flexible. In addition, a performance requirement, overall power consumption, and costs of a processor are not increased, and availability is relatively high.

It may be understood that currently, the electronic device 100 has a relatively high hardware configuration, and a total quantity N of signal channels is relatively large. If one signal channel is used to track a signal of one satellite, there are a relatively large quantity of idle channels. Therefore, in this embodiment of this application, when the n signal channels are used to track a signal of a same satellite, the correlator configuration can be adjusted without modifying the correlator hardware configuration (to improve tracking precision), to effectively use the idle channels and improve product availability.

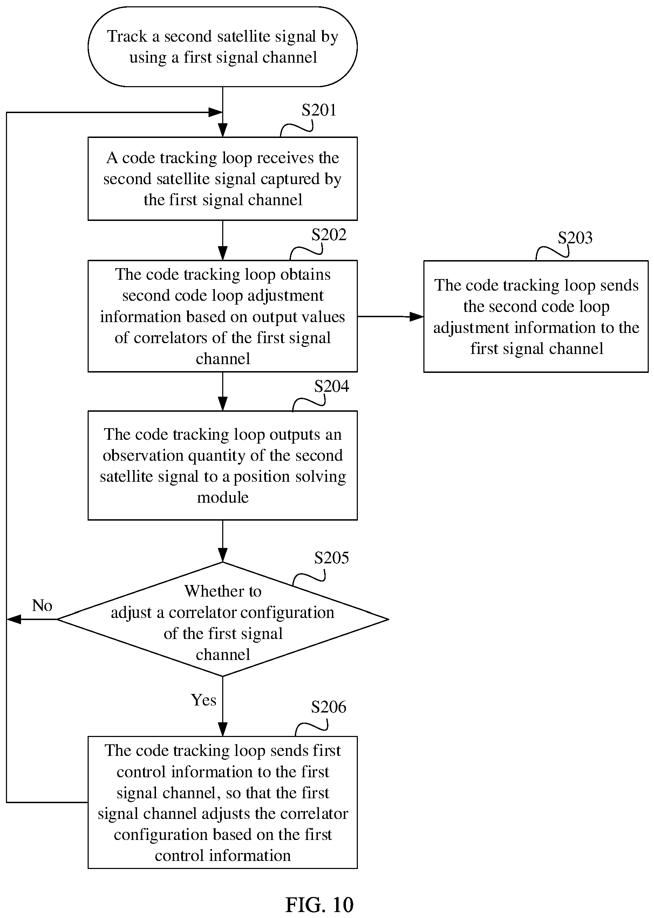

In an implementation, the electronic device 100/the DSP 102 may further determine, in real time in a satellite signal tracking process, whether to adjust a correlator configuration mode. For a specific implementation procedure, refer to FIG. 10.

FIG. 10 is a schematic flowchart of another configuration method according to an embodiment of this application. The method may include but is not limited to the following steps.

S201: A code tracking loop receives a second satellite signal captured by a first signal channel.

In an implementation, N signal channels include the first signal channel, and the first signal channel may include one or more signal channels. When a correlator configuration of the first signal channel is in the foregoing single-channel mode, the first signal channel includes only one signal channel. For a specific example, refer to any signal channel shown in FIG. 2, or the logical channel N' (including the signal channel N) shown in FIG. 3. When the correlator configuration of the first signal channel is in the foregoing multi-channel mode, the first signal channel includes a plurality of signal channels. For a specific example, refer to the logical channel 1 (including the signal channel 1 to the signal channel n) shown in FIG. 3. In some examples, the correlator configuration of the first signal channel is the single-channel mode by default.

S202: The code tracking loop obtains second code loop adjustment information based on output values of correlators of the first signal channel.

In an implementation, with reference to the descriptions of the single-channel mode and the multi-channel mode, when the correlator configuration of the first signal channel is in the foregoing single-channel mode, the code tracking loop may obtain the second code loop adjustment information based on output values of m correlators of the first signal channel; and when the correlator configuration of the first signal channel is in the foregoing multi-channel mode, the code tracking loop may obtain the second code loop adjustment information based on output values of *m'* correlators of the first signal channel. Other descriptions are similar to the descriptions of S102 in FIG. 9. For details, refer to the descriptions of S102 in FIG. 9.

S203: The code tracking loop sends the second code loop adjustment information to the first signal channel.

Descriptions of S203 are similar to the descriptions of S103 in FIG. 9. A difference lies in that the first signal channel may include a plurality of signal channels, or may include one signal channel. For details, refer to the descriptions of S103 in FIG. 9.

S204: The code tracking loop outputs an observation quantity of the second satellite signal to a position solving module.

In an implementation, the code tracking loop may obtain the observation quantity of the second satellite signal based on the output values of the correlators of the first signal channel. The observation quantity of the second satellite signal is used to obtain position information of the electronic device 100/the DSP 102 by using the position solving module.

It may be understood that the code tracking loop is closed-circuit feedback. Therefore, S202 and S203 may be cyclically performed a plurality of times, but the second code loop adjustment information obtained each time S202 and S203 are performed may be different. S204 may be understood as a branch operation led out from a cycle of S202 and S203. The second code loop adjustment information used in S204 may be second code loop adjustment information obtained by performing one of a plurality of times of cyclic execution.

When the correlator configuration of the first signal channel is in the multi-channel mode, S201 to S204 are consistent with S101 to S104 in FIG. 9.

S205: The code tracking loop determines whether to adjust the correlator configuration of the first signal channel.

In an implementation, when the code tracking loop determines to adjust the correlator configuration of the first signal channel, S206 may be performed; and when the code tracking loop determines not to adjust the correlator configuration of the first signal channel, a second satellite signal may be further captured and tracked by using the unadjusted first signal channel. For example, S201 to S204 are performed again.

In an implementation, the correlator configuration of the first signal channel may include but is not limited to at least one of the following: a quantity of signal channels in the first signal channel (the first signal channel is used to track the second satellite signal, and therefore the quantity may also be referred to as a quantity of signal channels used to track the second satellite signal), a correlator spacing, a quantity of correlators, a position of a prompt correlator, a correlator span, or an offset of a secondary channel relative to a primary channel.

In an implementation, the code tracking loop may determine, based on a first parameter, whether to adjust the correlator configuration of the first signal channel. The first parameter may include but is not limited to at least one of the following: a quantity of currently idle channels, a modification time interval, a satellite constellation, a satellite frequency, a pseudo-range residual, a pseudo-code NCO adjustment quantity, or environment information of an environment in which the electronic device 100 is located. The currently idle channel is a signal channel that is currently not used, for example, a signal channel that is not used to capture and track a satellite signal. The modification time interval is an epoch between latest adjusting the correlator configuration and current determining, that is, a difference value between a time of latest adjusting the correlator configuration and a current time. The pseudo-range residual is, for example, obtained by a position-velocity-time (position velocity time, PVT) module in the electronic device 100 after the position solving module performs position solving. The pseudo-range residual may be used to determine code loop tracking effect. The pseudo-code NCO adjustment quantity is, for example, the second code loop adjustment information obtained in S202. The environment information may represent a type of an environment in which the electronic device 100/the DSP 102 is currently located, for example, an open environment or a harsh environment. The environment information is, for example, but not limited to, obtained based on at least one of the following: historical information, a carrier-to-noise ratio of the observation quantity of the second satellite signal, a pseudo-range residual, and a dilution of precision (dilution of precision, DOP). The historical information includes, for example but not limited to, at least one of the following: a carrier-to-noise ratio of an observation quantity of a satellite signal in a previous epoch (a previous second), a pseudo-range residual of the previous epoch, or historical average measurement information (for an example of the measurement information, refer to parameters such as the pseudo-range residual in the foregoing example). Specific determining examples are as follows.

Example 1: The code tracking loop may perform determining based on the quantity of currently idle channels. In a case, it is assumed that the correlator configuration of the first signal channel is in the single-channel mode. If the quantity of currently idle channels is less than or equal to a preset threshold 1, the correlator configuration of the first signal channel may not be adjusted, to save channel resources. Optionally, if the quantity of currently idle channels is greater than a preset threshold 2, the correlator configuration of the first signal channel may be adjusted to be in the multi-channel mode, to effectively use idle channel resources. In another case, it is assumed that the correlator configuration of the first signal channel is in the multi-channel mode. If the quantity of currently idle channels is less than or equal to a preset threshold 3, the correlator configuration of the first signal channel may be adjusted to be in the single-channel mode, or the quantity of signal channels included in the first signal channel may be reduced (that is, n) (n is still greater than 1, that is, the multi-channel mode is still maintained), to save channel resources. Optionally, if the quantity of currently idle channels is greater than a preset threshold 4, the correlator configuration of the first signal channel may not be adjusted, or the quantity of signal channels included in the first signal channel (that is, n) may be increased, to effectively use idle channel resources. The preset threshold 2 is greater than or equal to the preset threshold 1, and the preset threshold 4 is greater than or equal to the preset threshold 3.

Example 2: The code tracking loop may perform determining based on the modification time interval. If the modification time interval is less than or equal to a preset threshold 5, the correlator configuration of the first signal channel may not be adjusted. In this way, frequent adjustment of the code loop correlator can be avoided, to improve stability.

Example 3: The code tracking loop may perform determining based on the satellite constellation. It is assumed that visibility of a satellite signal of a constellation 1 is generally relatively good in a specific region, and a satellite signal of a constellation 2 is relatively poor. When the second satellite signal changes from the satellite signal of the constellation 1 to the satellite signal of the constellation 2, the multi-channel mode may be changed to the single-channel mode shown in FIG. 4 for tracking. When the second satellite signal changes from the satellite signal of the constellation 2 to the satellite signal of the constellation 1, the multi-channel mode may be used for tracking, for example, the correlator configuration of the first signal channel is adjusted to be in the first mode in the multi-channel mode, to track a high-quality signal more precisely.

Example 4: The code tracking loop may perform determining based on the satellite frequency. For pseudo-codes of satellite signals of different frequencies, lengths of single chips may be different. For example, a chip length of a global positioning system (global positioning system, GPS) L1 signal is about 294 meters (m), and a chip length of a GPS L5 signal is about 29.4m. The L5 signal with a shorter chip length has better anti-multipath effect. When the second satellite signal changes from the L1 signal to the L5 signal, the branch quantity of the first signal channel may be increased, for example, the correlator configuration of the first signal channel is adjusted to be in the second mode in the multi-channel mode, to search for a correlation peak in a larger range. Alternatively, when the second satellite signal changes from the L1 signal to the L5 signal, the correlator spacing of the first signal channel may also be reduced, for example, the correlator configuration of the first signal channel is adjusted to be in the first mode in the multi-channel mode, to identify a finer correlator energy peak deviation. It may be understood that, when the second satellite signal is the L5 signal, whether to use the first mode or the second mode may be determined based on a current environment. For a specific example, refer to Example 7 below.

Example 5: The code tracking loop may perform determining based on the pseudo-range residual. When the pseudo-range residual is greater than or equal to a preset threshold 6, it indicates a relatively large code loop tracking deviation, and the correlator span and/or the correlator spacing of the first signal channel may be increased. For example, the correlator configuration of the first signal channel is adjusted to be in the second mode in the multi-channel mode, to search for a correlation peak at coarser granularity and/or in a larger range. When the pseudo-range residual is less than a preset threshold 7, it indicates a relatively small code loop tracking deviation, and the correlator spacing and/or the correlator span of the first signal channel may be reduced. For example, the correlator configuration of the first signal channel is adjusted to be in the first mode in the multi-channel mode, to search for a correlation peak at finer granularity and/or in a smaller range. The preset threshold 6 is greater than or equal to the preset threshold 7.

Example 6: The code tracking loop may perform determining based on the pseudo-code NCO adjustment quantity. When the code loop NCO adjustment quantity is greater than or equal to a preset threshold 8 within a preset duration 1, the correlator span of the first signal channel may be increased. For example, the correlator configuration of the first signal channel is adjusted to be in the second mode in the multi-channel mode, to search for a correlation peak in a larger range. When the code loop NCO adjustment quantity is less than a preset threshold 9 within a preset duration 2, the correlator spacing of the first signal channel may be reduced. For example, the correlator configuration of the first signal channel is adjusted to be in the first mode in the multi-channel mode, to search for a correlation peak at finer granularity. The preset threshold 8 is greater than or equal to the preset threshold 9.

Example 7: The code tracking loop may perform determining based on the environment information. When the environment information indicates that a current scenario is an open scenario (code loop tracking effect is usually relatively good), the correlator configuration of the first signal channel may be adjusted to be in the single-channel mode, or the quantity of signal channels included in the first signal channel may be reduced (that is, n) (n is still greater than 1, that is, the multi-channel mode is still maintained), to save channel resources. When the environment information indicates that a current scenario is a harsh scenario (code loop tracking effect is usually relatively poor), a distance between a multipath signal and a main signal is determined. If the distance is greater than or equal to a preset threshold 10, the correlator span of the first signal channel may be increased. For example, the correlator configuration of the first signal channel is adjusted to be in the second mode in the multi-channel mode, to search for a correlation peak in a larger range. If the distance is less than a preset threshold 11, the correlator spacing of the first signal channel may be reduced. For example, the correlator configuration of the first signal channel is adjusted to be in the first mode in the multi-channel mode, to search for a correlation peak at finer granularity. The preset threshold 10 is greater than or equal to the preset threshold 11.

S206: The code tracking loop sends first control information to the first signal channel, so that the first signal channel adjusts the correlator configuration based on the first control information.

In an implementation, the first control information indicates to adjust the correlator configuration of the first signal channel. For example, the first control information may include information about an adjusted correlator configuration. After the correlator configuration of the first signal channel is adjusted, the second satellite signal may be captured and tracked by using the first signal channel obtained after the correlator configuration is adjusted. For example, S201 to S204 are performed again (the first signal channel is a first signal channel obtained after the correlator configuration is adjusted). In some examples, the first control information may include a tracking parameter of the first signal channel that needs to be adjusted/that is adjusted. For example, the tracking parameter includes an identifier of a tracked satellite and an identifier of a signal tracking loop that receives an output value of a correlator. In some examples, when the first signal channel includes a plurality of signal channels, the first control information may include control information of the plurality of signal channels. Each signal channel in the first signal channel may adjust a tracking parameter of the signal channel based on corresponding control information, for example, adjust the tracked satellite and the signal tracking loop that receives the output value of the correlator, to implement adjustment of the correlator configuration of the first signal channel. For a specific example, refer to the descriptions in FIG. 3. Optionally, the plurality of signal channels in the first signal channel after the correlator configuration is adjusted may use same control information. Therefore, the plurality of signal channels can track information of a same satellite, and all output values of correlators are input to a same signal tracking loop.

In an implementation, when the first signal channel is in the single-channel mode, and the first control information indicates that the correlator configuration of the first signal channel is in the multi-channel mode, a manner of adjusting the correlator configuration of the first signal channel may include but is not limited to the equal-spacing manner shown in FIG. 5A or the unequal-spacing manner shown in FIG. 6A, and optionally, may further include adjusting the position of the prompt branch.

For example, the method shown in FIG. 10 is applied to the electronic device 100/the DSP 102 shown in FIG. 2/FIG. 3. When the correlator configuration of the first signal channel is in the single-channel mode, the first signal channel is any signal channel (it is assumed that the signal channel is a signal channel 1) shown in FIG. 2, the code tracking loop belongs to the signal tracking loop 1 shown in FIG. 2, and the second code loop adjustment information corresponds to the adjustment information 1 shown in FIG. 2. When the correlator configuration of the first signal channel is in the multi-channel mode, the first signal channel belongs to the logical channel 1 shown in FIG. 3, the code tracking loop belongs to the signal tracking loop in the logical channel 1 shown in FIG. 3, and the second code loop adjustment information corresponds to the adjustment information sent by the signal tracking loop in the logical channel 1 shown in FIG. 3 to the n signal channels.

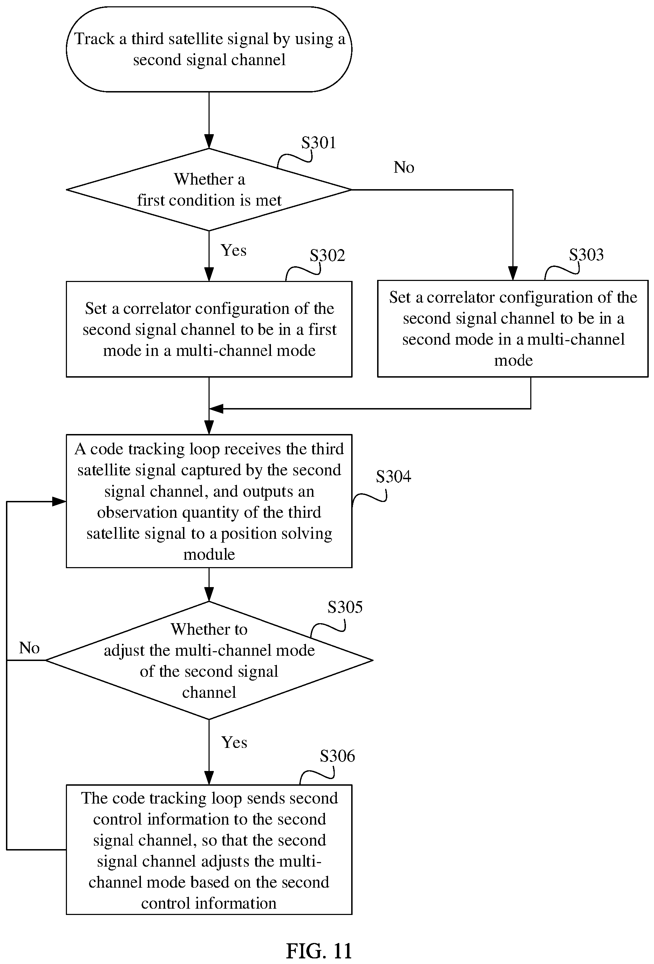

In an implementation, the electronic device 100/the DSP 102 may further adaptively switch the multi-channel mode of the signal channel in a satellite signal tracking process. For a specific implementation procedure, refer to FIG. 11.

FIG. 11 is a schematic flowchart of another communication method according to an embodiment of this application. The method may include but is not limited to the following steps.

S301: A code tracking loop determines whether a first condition is met.

In an implementation, after the electronic device 100/the DSP 102 is initialized, the code tracking loop determines whether the first condition is met, to determine a correlator configuration of a second signal channel. This may be understood as determining an initial correlator configuration of the second signal channel. N signal channels of the electronic device 100/the DSP 102 include the second signal channel.

In an implementation, when determining that the first condition is met, the code tracking loop may send, to the second signal channel, control information indicate to set a correlator configuration to be in a first mode. For example, the second signal channel performs S302. When determining that the first condition is not met, the code tracking loop may send, to the second signal channel, control information indicate to set a correlator configuration to be in a second mode. For example, the second signal channel performs S303.

In an implementation, a determining idea of S301 is similar to a determining idea of S205 in FIG. 10, and the first condition may be related to the first parameter (for example, the quantity of currently idle channels, the satellite constellation, the satellite frequency, or the environment information) in S205. In some examples, the first condition is that the quantity of currently idle channels is greater than or equal to a preset threshold 12. In some other examples, the first condition is that a constellation of a current third satellite signal is a constellation 1. In some other examples, the first condition is that the environment information indicates that a current scenario is a harsh scenario.

S302: Set a correlator configuration of the second signal channel to be in a first mode in a multi-channel mode.

In an implementation, when the first condition is met, the second signal channel may set the correlator configuration to be in the first mode in the multi-channel mode based on control information that is sent by the code tracking loop and that indicates to set the correlator configuration to be in the first mode.

S303: Set a correlator configuration of the second signal channel to be in a second mode in a multi-channel mode.

In an implementation, when the first condition is not met, the second signal channel may set the correlator configuration to be in the second mode in the multi-channel mode based on control information that is sent by the code tracking loop and that indicates to set the correlator configuration to be in the second mode.

For example, for the correlator configurations of the first mode and the second mode, respectively refer to FIG. 8A and FIG. 8B. For another example, for the correlator configurations of the first mode and the second mode, respectively refer to FIG. 8A and FIG. 8C.

S304: The code tracking loop receives the third satellite signal captured by the second signal channel, and outputs an observation quantity of the third satellite signal to a position solving module.

S304 is similar to S101 to S104 in FIG. 9. For details, refer to descriptions of S101 to S104 in FIG. 9.

S305: The code tracking loop determines whether to adjust the multi-channel mode of the second signal channel.

In an implementation, when the code tracking loop determines to adjust the multi-channel mode of the second signal channel, S306 may be performed; and when the code tracking loop determines not to adjust the multi-channel mode of the second signal channel, the third satellite signal may be further captured and tracked by using the unadjusted second signal channel. For example, S304 is performed again.

In an implementation, a determining idea of S305 is similar to a determining idea of S205 in FIG. 10, and the code tracking loop may determine, based on the first parameter, whether to adjust the multi-channel mode of the second signal channel. In some examples, the code tracking loop may determine, based on a pseudo-range residual, whether to adjust the multi-channel mode of the second signal channel. Specifically, when the correlator configuration of the second signal channel is in the first mode (that is, S302 is performed), the code tracking loop may determine whether the pseudo-range residual is greater than or equal to a threshold A; and when the pseudo-range residual is greater than or equal to the threshold A, determine to adjust the multi-channel mode of the second signal channel to be in the second mode; or when the pseudo-range residual is less than the threshold A, determine not to adjust the multi-channel mode of the second signal channel. When the correlator configuration of the second signal channel is in the second mode (that is, S303 is performed), the code tracking loop may determine whether the pseudo-range residual is less than or equal to a threshold B; and when the pseudo-range residual is less than or equal to the threshold B, determine to adjust the multi-channel mode of the second signal channel to be in the first mode; or when the pseudo-range residual is greater than the threshold B, determine not to adjust the multi-channel mode of the second signal channel.

In an implementation, the threshold A is related to a length L1 corresponding to a maximum offset chip phase of a current correlator, for example, the threshold A is equal to L1. For example, the correlator configuration of the second signal channel is in the first mode shown in FIG. 8A. The maximum offset chip phase of the correlator shown in FIG. 8A is: a chip of the leftmost correlator (that is, -2 chips), or a chip of the rightmost correlator (that is, 9/4 chips). Smaller -2 chips may be used as the maximum offset chip phase. It is assumed that the threshold A is equal to L1. The threshold A is a length of two chips. In an implementation, the threshold B is related to a length L2 corresponding to a minimum offset chip phase of a current correlator, for example, the threshold B is equal to 2×L1. For example, the correlator configuration of the second signal channel is in the second mode shown in FIG. 8B, and a minimum offset chip phase of a correlator shown in FIG. 8B is a correlator spacing, that is, 1/2 chip. It is assumed that the threshold B is equal to 2×L1. The threshold B is a length of one chip. In some examples, it is assumed that the threshold A is a length of two chips, and the threshold B is a length of one chip. Because a chip length of a GPS L5 signal satisfies $l_{chip}$ = 29.4m, the threshold A satisfies $A = 2 \times l_{chip}$ = 58.8m, and the threshold B satisfies $B = l_{chip}$ = 29.4m.

S306: The code tracking loop sends second control information to the second signal channel, so that the second signal channel adjusts the multi-channel mode based on the second control information.

In an implementation, the second control information indicates to adjust the multi-channel mode of the second signal channel. For example, the second control information may include information about an adjusted multi-channel mode. After the multi-channel mode of the second signal channel is adjusted, the third satellite signal may be captured and tracked by using the second signal channel after the multi-channel mode is adjusted. For example, S304 (the second signal channel is the second signal channel after the multi-channel mode is adjusted) is performed again. Descriptions of the second control information are similar to the descriptions of the first control information in S206 in FIG. 10. Details are not described again.

FIG. 11 is described by using an example in which the initial correlator configuration of the second signal channel is determined by using S301. In another implementation, the initial correlator configuration of the second signal channel may also be the first mode or the second mode by default. In other words, S301 is not performed, and S302 or S303 is directly performed.

FIG. 11 is described by using an example in which the first mode and the second mode in the multi-channel mode are adaptively switched. In specific implementation, any two multi-channel modes may be adaptively switched, for example, a third mode shown in FIG. 8B and a fourth mode shown in FIG. 8C are adaptively switched. A specific procedure is similar to the procedure shown in FIG. 11. A difference lies in specific determining manners of S301 and S305. This is not limited thereto. Three or more multi-channel modes may be adaptively switched. For example, the first mode shown in FIG. 8A, the second mode (that is, the third mode) shown in FIG. 8B, and the fourth mode shown in FIG. 8C are adaptively switched. Types of adaptively switched multi-channel modes and a quantity of adaptively switched multi-channel modes are not limited in this embodiment of this application.

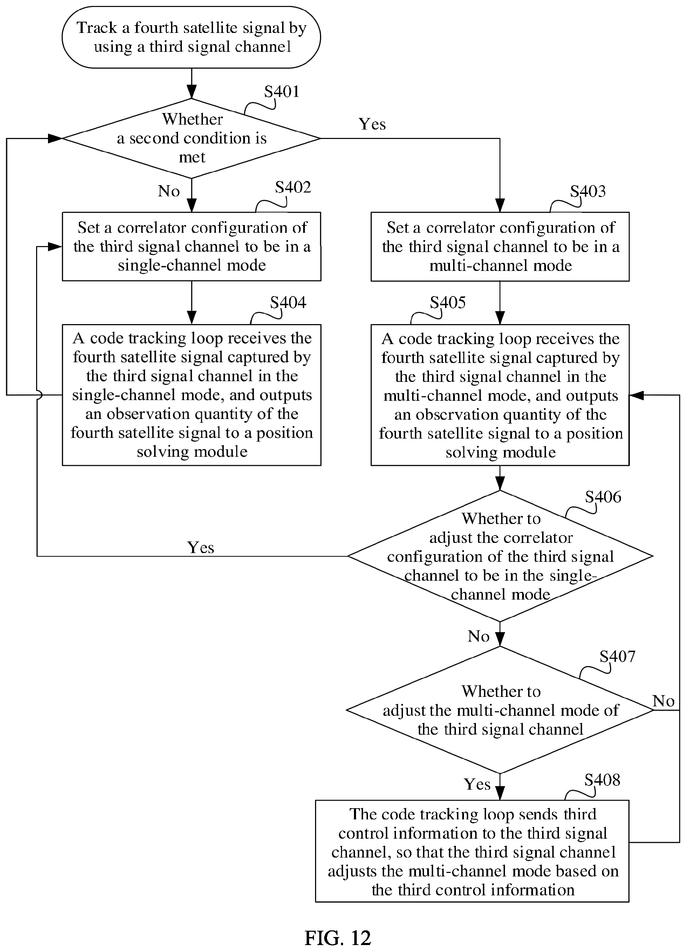

In an implementation, the signal channel in the electronic device 100/the DSP 102 may alternatively adaptively switch between a single-channel mode and a multi-channel mode, and between a plurality of multi-channel modes in a satellite signal tracking process. For a specific implementation procedure, refer to FIG. 12.

FIG. 12 is a schematic flowchart of another configuration method according to an embodiment of this application. The method may include but is not limited to the following steps.

S401: A code tracking loop determines whether a second condition is met.

In an implementation, after the electronic device 100/the DSP 102 is initialized, the code tracking loop determines whether the second condition is met, to determine a correlator configuration of a third signal channel. This may be understood as determining an initial correlator configuration of the third signal channel. N signal channels of the electronic device 100/the DSP 102 include the third signal channel.

In an implementation, when the code tracking loop determines that the second condition is not met, the correlator configuration of the third signal channel may be control information of a single-channel mode, for example, S402. When determining that the second condition is met, the code tracking loop may send, to the third signal channel, control information indicate to set a correlator configuration to be in a multi-channel mode. For example, the third signal channel performs S403.

In an implementation, a determining idea of S401 is similar to a determining idea of S205 in FIG. 10, and the second condition may be related to the first parameter (for example, the quantity of currently idle channels, the satellite constellation, the satellite frequency, or the environment information) in S205. In some examples, the second condition is that a frequency of a current fourth satellite signal is L5, and the quantity of currently idle channels is greater than or equal to a preset proportion (the preset proportion is greater than 0 and less than 1, for example, 0.35) multiplied by a total channel quantity N. In some other examples, the second condition is that the environment information indicates that a current scenario is a harsh scenario.

S402: Set a correlator configuration of the third signal channel to be in the single-channel mode.

In an implementation, when the second condition is not met, the correlator configuration of the third signal channel may use the single-channel mode. In some examples, after the electronic device 100/the DSP 102 is initialized, when determining that the second condition is not met, the code tracking loop does not send, to the third signal channel, control information indicating to adjust/set the correlator configuration. The third signal channel may be in the single-channel mode by default.

S403: Set a correlator configuration of the third signal channel to be in the multi-channel mode.

In an implementation, when the second condition is met, the third signal channel may set the correlator configuration to be in the multi-channel mode based on control information that is sent by the code tracking loop and that indicates to set the correlator configuration to be in the multi-channel mode.

For example, for the correlator configuration of the single-channel mode, refer to FIG. 4; and for the correlator configuration of the multi-channel mode, refer to FIG. 5B, FIG. 5C, FIG. 6B, FIG. 6C, FIG. 8A, FIG. 8B, or FIG. 8C.

S404: The code tracking loop receives the fourth satellite signal captured by the third signal channel in the single-channel mode, and outputs an observation quantity of the fourth satellite signal to a position solving module.

In an implementation, the third signal channel in the single-channel mode may be used to capture and track the fourth satellite signal, that is, perform S404. A case in which the correlator configuration of the first signal channel is in the single-channel mode in S404 is similar to that in S201 to S204 in FIG. 10. For details, refer to the descriptions of S201 to S204 in FIG. 10.

In an implementation, after S404, the code tracking loop may re-determine whether the second condition is met (that is, perform S401), to determine whether the correlator configuration of the third signal channel is to be maintained in the single-channel mode or adjusted to be in the multi-channel mode.

S405: The code tracking loop receives the fourth satellite signal captured by the third signal channel in the multi-channel mode, and outputs an observation quantity of the fourth satellite signal to a position solving module.

A case in which the correlator configuration of the first signal channel is in the multi-channel mode in S405 is similar to that in S201 to S204 in FIG. 10. For details, refer to the descriptions of S201 to S204 in FIG. 10.

In an implementation, after S405, the code tracking loop may perform S406, to determine whether the correlator configuration of the third signal channel is to be adjusted to be in the single-channel mode or maintained in the multi-channel mode.

S406: The code tracking loop determines whether to adjust the correlator configuration of the third signal channel to be in the single-channel mode.

In an implementation, when the code tracking loop determines to adjust the correlator configuration of the third signal channel to be in the single-channel mode, control information indicating to set the correlator configuration to be in the single-channel mode may be sent to the third signal channel, so that the third signal channel sets the correlator configuration to be in the single-channel mode based on the control information, for example, S402. When the code tracking loop determines to adjust the correlator configuration of the third signal channel to be in the multi-channel mode, it may be determined whether to adjust a type of the multi-channel mode of the third signal channel, that is, S407 is performed.

In an implementation, the code tracking loop may determine, based on quality of the current fourth satellite signal, whether to adjust the correlator configuration of the third signal channel to be in the single-channel mode. When the quality is higher than or equal to a first quality threshold (which may be understood as good quality), the correlator configuration of the third signal channel is adjusted to be in the single-channel mode. When the quality is lower than a second quality threshold (which may be understood as poor quality), it is determined to maintain the correlator configuration of the third signal channel as the multi-channel mode. The first quality threshold is greater than or equal to the second quality threshold.

In some examples, an elevation angle of a satellite signal may represent quality of the satellite signal. When an elevation angle of the current fourth satellite signal is greater than or equal to a preset elevation angle threshold, it indicates that a satellite of the fourth satellite signal is a high-elevation satellite (usually, there is no multipath interference), and it may be considered as that quality is higher than or equal to a first quality threshold. In this case, the code tracking loop may determine to adjust the correlator configuration of the third signal channel to be in the single-channel mode, to release channel resources. When an elevation angle of the current fourth satellite signal is less than a preset elevation angle threshold, it may be considered that the quality is lower than a second quality threshold, and the code tracking loop may determine to maintain the correlator configuration of the third signal channel in the multi-channel mode. In some other examples, when the correlator configuration of the third signal channel is in the first mode in the multi-channel mode, the code tracking loop may determine whether an elevation angle of the current fourth satellite signal is greater than or equal to a threshold C. If the elevation angle is greater than or equal to the threshold C, it is determined to adjust the correlator configuration of the third signal channel to be in the single-channel mode. If the elevation angle is less than the threshold C, it is determined to maintain the correlator configuration of the third signal channel in the multi-channel mode. When the correlator configuration of the third signal channel is in the second mode in the multi-channel mode, the tracking loop may determine whether an elevation angle of the current fourth satellite signal is greater than or equal to a threshold D. If the elevation angle is greater than or equal to the threshold D, it is determined to adjust the correlator configuration of the third signal channel to be in the single-channel mode. If the elevation angle is less than the threshold D, it is determined to maintain the correlator configuration of the third signal channel in the multi-channel mode. Optionally, the threshold C is greater than the threshold D. For example, the threshold C is 60 degrees, and the threshold D is 55 degrees. This is not limited to the foregoing examples. In some other examples, whether to adjust the correlator configuration of the third signal channel to be in the single-channel mode may be further determined based on another parameter that can represent quality. For example, when a parameter 1 is less than or equal to a preset threshold, it indicates that quality is higher than or equal to the first quality threshold; and when the parameter 1 is greater than the preset threshold, it indicates that the quality is lower than the second quality threshold. A specific parameter type is not limited in this embodiment of this application.

S407: The code tracking loop determines whether to adjust the multi-channel mode of the third signal channel.

In an implementation, when the code tracking loop determines to adjust the multi-channel mode of the third signal channel, S408 may be performed; and when the code tracking loop determines not to adjust the multi-channel mode of the third signal channel, the fourth satellite signal may be further captured and tracked by using the unadjusted third signal channel. For example, S405 is performed again. A determining manner of S407 is similar to a determining manner of S305 in FIG. 11. For details, refer to the descriptions of S305 in FIG. 11.

S408: The code tracking loop sends third control information to the third signal channel, so that the third signal channel adjusts the multi-channel mode based on the third control information.

In an implementation, the third control information indicates to adjust the multi-channel mode of the third signal channel. For example, the third control information may include information about an adjusted multi-channel mode. After the multi-channel mode of the third signal channel is adjusted, the fourth satellite signal may be captured and tracked by using the third signal channel after the multi-channel mode is adjusted. For example, S405 (the third signal channel is the third signal channel after the multi-channel mode is adjusted) is performed again. Descriptions of the third control information are similar to the descriptions of the first control information in S206 in FIG. 10. Details are not described again.

FIG. 12 is determined by using an example in which the initial correlator configuration of the third signal channel is determined by using S401. In another implementation, the initial correlator configuration of the third signal channel may also be the single-channel mode or the multi-channel mode by default. In other words, the electronic device 100/the DSP 102 does not perform S401 after initialization, but directly performs S402 or S403.

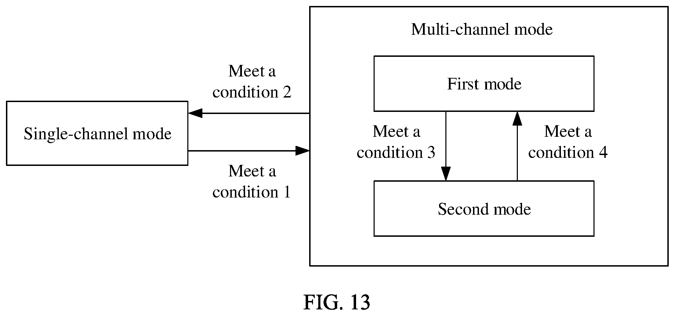

FIG. 13 is a diagram of an example of state conversion of a correlator configuration of a fourth signal channel.

As shown in FIG. 13, when the correlator configuration of the fourth signal channel is in a single-channel mode, if a condition 1 is met, the correlator configuration may be switched to be in a multi-channel mode; and when the correlator configuration of the fourth signal channel is in the multi-channel mode, if a condition 2 is met, the correlator configuration may be switched to be in the single-channel mode. In some examples, the fourth signal channel is the third signal channel in FIG. 12, the condition 1 is the second condition in S401, and the condition 2 is a condition (for example, that the elevation angle is greater than or equal to the preset elevation angle threshold) for the code tracking loop determining that the correlator configuration of the third signal channel is in the single-channel mode in S406.

As shown in FIG. 13, when the correlator configuration of the fourth signal channel is in the first mode in the multi-channel mode, if a condition 3 is met, the correlator configuration may be switched to be in the second mode in the multi-channel mode; and when the correlator configuration of the fourth signal channel is in the second mode in the multi-channel mode, if a condition 4 is met, the correlator configuration may be switched to be in the first mode in the multi-channel mode. In some examples, the fourth signal channel is the second signal channel in FIG. 11/the third signal channel in FIG. 12. For descriptions of the condition 3 and the condition 4, refer to the descriptions of S305. For example, the condition 3 is that a pseudo-range residual is greater than or equal to the threshold A, and the condition 4 is that a pseudo-range residual is less than or equal to the threshold B.

In the methods shown in FIG. 10 to FIG. 12, the electronic device 100/the DSP 102 may adaptively adjust a correlator configuration of a signal channel in a satellite signal tracking process, for example, dynamically adjust the correlator configuration in cases of different satellites, different environments, and different time periods, to further adapt to changes in different scenarios and improve tracking precision and robustness of a satellite signal. In addition, the multi-channel mode is used only when a specific condition is met. For example, in S406 in FIG. 12, the single-channel mode is used when quality of a satellite signal is relatively good. In this case, relatively good tracking effect can be achieved without using the multi-channel mode for tracking. Therefore, by currently using the single-channel mode, an overall quantity of tracked satellites due to occupation of too many multi-channel resources can be reduced when tracking effect is ensured. Higher availability is implemented.

All or a part of the method provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state disk (solid-state disk, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A configuration method, applied to an electronic device, wherein the method comprises:

   receiving, by the electronic device, a first satellite signal of a same satellite by using n signal channels, wherein each of the n signal channels comprises m correlators, and n and m are integers greater than 1; and
   obtaining, by the electronic device, first code loop adjustment information and an observation quantity of the first satellite signal based on output values of correlators of the n signal channels, wherein the first code loop adjustment information is used to adjust pseudo-code phases of the n signal channels, and the observation quantity of the first satellite signal is used to obtain position information of the electronic device.

2. The method according to claim 1, wherein obtaining, by the electronic device, the first code loop adjustment information and the observation quantity of the first satellite signal based on the output values of the correlators of the n signal channels comprises:

obtaining, by the electronic device, the first code loop adjustment information and the observation quantity of the first satellite signal based on output values of $m'$ correlators, wherein the $m'$ correlators are some or all of $n \times m$ correlators of the $n$ signal channels, and m' is an integer greater than 1 and less than or equal to $n \times m$;

the $n$ signal channels comprise one primary channel and $n - 1$ secondary channels, and the secondary channel has an offset relative to the primary channel; and

spacings between any two adjacent correlators in one signal channel are equal and are $x$.

3. The method according to claim 2, wherein spacings between any two adjacent correlators in the $m'$ correlators are equal and are $x'$, an offset of a $d^{th}$ secondary channel relative to the primary channel is $d \times k$, d is a positive integer less than $n$, k is a rational common factor of $x$ and $x'$, and $x = n \times k$.

4. The method according to claim 2 or 3, wherein in the $m'$ correlators, a prompt correlator is a $\left(\frac{1+m'}{2}\right)^{th}$ correlator, or a prompt correlator is located after a $\left(\frac{1+m'}{2}\right)^{th}$ correlator.

5. The method according to any one of claims 1 to 4, wherein the method further comprises:
obtaining, by the electronic device, first carrier loop adjustment information based on the output values of the correlators of the n signal channels, wherein the first carrier loop adjustment information is used to adjust carrier phases or frequency offsets of the n signal channels.

6. The method according to any one of claims 1 to 5, wherein a correlator configuration of the n signal channels is in a multi-channel mode, and the multi-channel mode comprises a first mode or a second mode, wherein

a correlator span in the first mode is less than or equal to a first preset span, a correlator span in the second mode is greater than a second preset span, and the first preset span is less than or equal to the second preset span; and/or
a correlator spacing in the first mode is less than or equal to a first preset spacing, a correlator spacing in the second mode is greater than a second preset spacing, and the first preset spacing is less than or equal to the second preset spacing.

7. The method according to claim 6, wherein the method further comprises:

before receiving the first satellite signal of the same satellite by using the n signal channels, determining, by the electronic device, whether a first condition is met; and
when the first condition is met, configuring, by the electronic device, a correlator configuration mode of the n signal channels as the first mode; or
when the first condition is not met, configuring, by the electronic device, a correlator configuration mode of the n signal channels as the second mode, wherein the first condition is related to a first parameter, and the first parameter comprises at least one of the following: a quantity of currently idle signal channels, a satellite constellation of the first satellite signal, a satellite frequency of the first satellite signal, or information about an environment in which the electronic device is located.

8. The method according to claim 7, wherein the first condition is that the quantity of currently idle signal channels is greater than or equal to a first quantity of channels.

9. The method according to any one of claims 6 to 8, wherein the method further comprises:

after the electronic device obtains the first code loop adjustment information and the observation quantity of the first satellite signal based on the output values of the correlators of the n signal channels, when the correlator configuration of the n signal channels is in the first mode, determining, by the electronic device, whether a pseudo-range residual is greater than or equal to a first threshold; and when the pseudo-range residual is greater than or equal to the first threshold, setting, by the electronic device, the correlator configuration of the n signal channels to be in the second mode; or
after the electronic device obtains the first code loop adjustment information and the observation quantity of the first satellite signal based on the output values of the correlators of the n signal channels, when the correlator configuration of the n signal channels is in the second mode, determining, by the electronic device, whether a pseudo-range residual is less than or equal to a second threshold; and when the pseudo-range residual is less than or equal to the second threshold, setting, by the electronic device, the correlator configuration of the n signal channels to be in the first mode.

10. The method according to any one of claims 1 to 9, wherein receiving, by the electronic device, the first satellite signal of the same satellite by using the n signal channels comprises:

   when a second condition is met, receiving, by the electronic device, the first satellite signal by using the n signal channels; and the method further comprises:

   before the electronic device receives the first satellite signal of the same satellite by using the n signal channels, determining, by the electronic device, whether the second condition is met, wherein the second condition is related to a second parameter, and the second parameter comprises at least one of the following: the quantity of currently idle signal channels, the satellite constellation of the first satellite signal, the satellite frequency of the first satellite signal, or the information about the environment in which the electronic device is located; and when the second condition is not met, receiving, by the electronic device, the first satellite signal by using one signal channel, and obtaining code loop adjustment information and an observation quantity based on output values of correlators of the signal channel.

11. The method according to claim 10, wherein the second condition is that the frequency of the first satellite signal is L5, and the quantity of currently idle signal channels is greater than or equal to a preset proportion of a total quantity of channels.

12. The method according to any one of claims 1 to 11, wherein the method further comprises:

   after the electronic device obtains the first code loop adjustment information and the observation quantity of the first satellite signal based on the output values of the correlators of the n signal channels, determining, by the electronic device, whether quality of the first satellite signal is higher than or equal to a preset quality threshold; and
when the quality of the first satellite signal is higher than or equal to the preset quality threshold, receiving, by the electronic device, the first satellite signal by using one signal channel.

13. The method according to any one of claims 1 to 12, wherein the method further comprises:

   after the electronic device obtains the first code loop adjustment information and the observation quantity of the first satellite signal based on the output values of the correlators of the n signal channels, determining, by the electronic device based on a third parameter, whether to adjust the correlator configuration of the n signal channels, wherein the third parameter comprises at least one of the following: the quantity of currently idle signal channels, a time interval for modifying the correlator configuration of the n signal channels, the satellite constellation of the first satellite signal, the satellite frequency of the first satellite signal, a pseudo-range residual, the first code loop adjustment information, or the information about the environment in which the electronic device is located; and when determining to adjust the correlator configuration of the n signal channels, adjusting, by the electronic device, the correlator configuration of the n signal channels.

14. The method according to claim 13, wherein adjusting, by the electronic device, the correlator configuration of the n signal channels comprises:
adjusting, by the electronic device, at least one of the following correlator configurations of the n signal channels: a quantity of signal channels used to track the first satellite signal, a correlator spacing, a quantity of correlators, a position of the prompt correlator, or a correlator span.

15. The method according to any one of claims 1 to 14, wherein the method further comprises:

   receiving, by the electronic device, a second satellite signal by using a first signal channel, wherein the first signal channel is one signal channel;
   obtaining, by the electronic device, second code loop adjustment information and an observation quantity of the second satellite signal based on output values of correlators of the first signal channel, wherein the second code loop adjustment information is used to adjust a pseudo-code phase of the first signal channel, and the observation quantity of the second satellite signal is used to obtain position information of the electronic device;

determining, by the electronic device based on a fourth parameter, whether to adjust a correlator configuration of the first signal channel, wherein the fourth parameter comprises at least one of the following: the quantity of currently idle signal channels, a time interval for modifying the correlator configuration of the first signal channel, a satellite constellation of the second satellite signal, a satellite frequency of the second satellite signal, the pseudo-range residual, the second code loop adjustment information, or the information about the environment in which the electronic device is located; and

adjusting, by the electronic device, the correlator configuration of the first signal channel when determining to adjust the correlator configuration of the first signal channel, wherein the correlator configuration that is of the first signal channel and that is to be adjusted by the electronic device comprises at least one of the following: a quantity of signal channels used to track the second satellite signal, the correlator spacing, the quantity of correlators, the position of the prompt correlator, or the correlator span.

16. The method according to claim 15, wherein the second satellite signal and the first satellite signal belong to signals of a same satellite, and adjusting, by the electronic device, the correlator configuration of the first signal channel comprises:

setting, by the electronic device, the correlator configuration of the first signal channel to be in the multi-channel mode; and

receiving, by the electronic device, the first satellite signal of the same satellite by using the n signal channels comprises:

after the electronic device sets the correlator configuration of the first signal channel to be in the multi-channel mode, receiving, by the electronic device, the first satellite signal of the same satellite by using the n signal channels.

17. The method according to any one of claims 1 to 16, wherein the n signal channels are some signal channels comprised in the electronic device.

18. An electronic device, comprising n signal channels, wherein n is a positive integer greater than 1, and the electronic device is configured to perform the method according to any one of claims 1 to 17.

19. An electronic device, comprising a transceiver, a processor, and a memory, wherein the memory is configured to store a computer program, and the processor invokes the computer program to perform the method according to any one of claims 1 to 17.

20. A computer storage medium, wherein the computer storage medium stores a computer program, and when the computer program is executed by a processor, the method according to any one of claims 1 to 17 is implemented.

**Electronic device 100**

FIG. 1

EP 4 752 603 A1

**Electronic device 100**

FIG. 2

EP 4 752 603 A1

**Electronic device 100**

FIG. 3

EP 4 752 603 A1

Signal channel 200
(single-channel mode)

Early offset    Prompt branch    Late offset

−4x    −3x    −2x    −x    0    x    2x    3x    4x    Chip

Early branch    Late branch

FIG. 4

Adjust a correlator configuration in an equal-spacing manner (multi-channel mode)

Secondary channel (a−1): −4x, −3x, −2x, −x, 0, x, 2x, 3x, 4x

Secondary channel 1: −4x, −3x, −2x, −x, 0, x, 2x, 3x, 4x

Primary channel: −4x, −3x, −2x, −x, 0, x, 2x, 3x, 4x

Chip

k

(a−1)*k

FIG. 5A

Multi-channel mode: Spacing x'=k

FIG. 5B

FIG. 5C

Adjust a correlator configuration in an unequal-spacing manner (multi-channel mode)

Secondary channel

Channel (n−1)
$-4x$   $-3x$   $-2x$   $-x$   $0$   $x$   $2x$   $3x$   $4x$

Channel 1
$-4x$   $-3x$   $-2x$   $-x$   $0$   $x$   $2x$   $3x$   $4x$

Primary channel (channel 0)
$-4x$   $-3x$   $-2x$   $-x$   $0$   $x$   $2x$   $3x$   $4x$

$\Delta 1$

...

$\Delta n{-}1$

Chip

FIG. 6A

EP 4 752 603 A1

34

Branch of a primary channel

Branch of a secondary channel

**Multi-channel mode**

Prompt branch

−1 −7/8 −1/2 −3/8 0 1/8 1/2 5/8 1 9/8

Chip

Δ1=1/8

## FIG. 6B

Branch of a primary channel

Branch of a secondary channel

**Multi-channel mode**

Prompt branch

−1 −1/2 0 1/2 3/4 1 5/4 7/4 9/4 11/4

Chip

Δ1=7/4

## FIG. 6C

Signal channel 200 obtained through adjustment of a position of a prompt branch

Early offset    Prompt branch    Late offset

−6x −5x −4x −3x −2x −x 0 x 2x

Chip

Early branch    Late branch

## FIG. 7

EP 4 752 603 A1

● Branch of a primary channel

● Branch of a secondary channel

**Multi-channel mode**

Prompt branch

−2　−7/4　−3/2　−5/4　−1　−3/4　−1/2　−1/4　0　1/4　1/2　3/4　1　5/4　3/2　7/4　2　9/4　　Chip

FIG. 8A

FIG. 8B

**Multi-channel mode**

Branch of a primary channel

Branch of a secondary channel

Prompt branch

Chip

−13/2  −6  −11/2  −5  −9/2  −4  −7/2  −3  −5/2  −2  −3/2  −1  −1/2  0  1/2  1  3/2  2

FIG. 8C

```
┌─────────────────────────────────────┐
│  Track a signal of a same satellite  │
│         by using n signal channels   │
└─────────────────────────────────────┘
                  │
                  ▼  S101
┌─────────────────────────────────────┐
│  A code tracking loop receives a     │
│  first satellite signal captured by  │
│  the n signal channels               │
└─────────────────────────────────────┘
                  │
                  ▼  S102
┌─────────────────────────────────────┐         S103
│  The code tracking loop obtains      │   ┌─────────────────────────────┐
│  first code loop adjustment          │   │  The code tracking loop     │
│  information based on output values  │──▶│  sends the first code loop  │
│  of correlators of the n signal      │   │  adjustment information to  │
│  channels                            │   │  the n signal channels      │
└─────────────────────────────────────┘   └─────────────────────────────┘
                  │
                  ▼  S104
┌─────────────────────────────────────┐
│  The code tracking loop outputs an   │
│  observation quantity of the first   │
│  satellite signal to a position      │
│  solving module                      │
└─────────────────────────────────────┘
```

FIG. 9

Track a second satellite signal by
using a first signal channel

S201

A code tracking loop receives the
second satellite signal captured by
the first signal channel

S202

The code tracking loop obtains
second code loop adjustment
information based on output values
of correlators of the first signal
channel

S203

The code tracking loop sends
the second code loop
adjustment information to the
first signal channel

S204

The code tracking loop outputs an
observation quantity of the second
satellite signal to a position solving
module

S205

Whether to
adjust a correlator configuration
of the first signal
channel

No

Yes

S206

The code tracking loop sends first
control information to the first
signal channel, so that the first
signal channel adjusts the correlator
configuration based on the first
control information

FIG. 10

Track a third satellite signal by using a second signal channel

S301
Whether a first condition is met

No

Yes

S302
Set a correlator configuration of the second signal channel to be in a first mode in a multi-channel mode

S303
Set a correlator configuration of the second signal channel to be in a second mode in a multi-channel mode

S304
A code tracking loop receives the third satellite signal captured by the second signal channel, and outputs an observation quantity of the third satellite signal to a position solving module

S305
Whether to adjust the multi-channel mode of the second signal channel

No

Yes

S306
The code tracking loop sends second control information to the second signal channel, so that the second signal channel adjusts the multi-channel mode based on the second control information

FIG. 11

Track a fourth satellite signal by using a third signal channel

S401

Whether a second condition is met

Yes

No

S402

Set a correlator configuration of the third signal channel to be in a single-channel mode

S403

Set a correlator configuration of the third signal channel to be in a multi-channel mode

S404

A code tracking loop receives the fourth satellite signal captured by the third signal channel in the single-channel mode, and outputs an observation quantity of the fourth satellite signal to a position solving module

S405

A code tracking loop receives the fourth satellite signal captured by the third signal channel in the multi-channel mode, and outputs an observation quantity of the fourth satellite signal to a position solving module

S406

Whether to adjust the correlator configuration of the third signal channel to be in the single-channel mode

Yes

No

S407

Whether to adjust the multi-channel mode of the third signal channel

No

Yes

S408

The code tracking loop sends third control information to the third signal channel, so that the third signal channel adjusts the multi-channel mode based on the third control information

FIG. 12

FIG. 13

## INTERNATIONAL SEARCH REPORT

| | International application No. |
|---|---|
| | **PCT/CN2024/138546** |

**A. CLASSIFICATION OF SUBJECT MATTER**

G01S 19/24(2010.01)i

According to International Patent Classification (IPC) or to both national classification and IPC

**B. FIELDS SEARCHED**

Minimum documentation searched (classification system followed by classification symbols)

IPC: G01S19 G01S5 H04B1

Documentation searched other than minimum documentation to the extent that such documents are included in the fields searched

Electronic data base consulted during the international search (name of data base and, where practicable, search terms used)

CNTXT, ENTXTC, ENTXT, DWPI, VEN: GNSS, 相关器, 解扩器, 通道, 信道, 伪码, 环路, 码相位, 跟踪, satellite?, correlat???, despreading, de-spreading, lane?, channel?, pseudo, loop?, code?, phase?, track+

**C. DOCUMENTS CONSIDERED TO BE RELEVANT**

| Category* | Citation of document, with indication, where appropriate, of the relevant passages | Relevant to claim No. |
|---|---|---|
| X | CN 115113240 A (BEIJING UNISTRONG SCIENCE & TECHNOLOGY CO., LTD.) 27 September 2022 (2022-09-27)<br>description, paragraphs 27-53 and 112-113 | 1, 5, 17-20 |
| X | CN 115113242 A (HEZHONG SIZHUANG (HENAN) TECHNOLOGY RESEARCH INSTITUTE CO., LTD.) 27 September 2022 (2022-09-27)<br>description, paragraphs 25-53 | 1 ,5, 17-20 |
| A | CN 102508263 A (BEIHANG UNIVERSITY) 20 June 2012 (2012-06-20)<br>entire document | 1-20 |
| A | CN 113466898 A (SPREADTRUM SEMICONDUCTOR (CHENGDU) CO., LTD.) 01 October 2021 (2021-10-01)<br>entire document | 1-20 |
| A | CN 115826000 A (XI'AN INSTITUTE OF SPACE RADIO TECHNOLOGY) 21 March 2023 (2023-03-21)<br>entire document | 1-20 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 February 2025** | **07 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/138546** |

### C. DOCUMENTS CONSIDERED TO BE RELEVANT

| Category* | Citation of document, with indication, where appropriate, of the relevant passages | Relevant to claim No. |
| --- | --- | --- |
| A | CN 101441260 A (INSTITUTE OF MICROELECTRONICS OF CHINESE ACADEMY OF SCIENCES) 27 May 2009 (2009-05-27)<br>entire document | 1-20 |
| A | US 2023228886 A1 (DEERE & CO.) 20 July 2023 (2023-07-20)<br>entire document | 1-20 |
| A | US 2020041656 A1 (UBLOX AG) 06 February 2020 (2020-02-06)<br>entire document | 1-20 |
| A | EP 1170597 A1 (ASULAB S.A.) 09 January 2002 (2002-01-09)<br>entire document | 1-20 |
| A | JP 2004271190 A (JAPAN RADIO CO., LTD.) 30 September 2004 (2004-09-30)<br>entire document | 1-20 |

Form PCT/ISA/210 (second sheet) (July 2022)

## INTERNATIONAL SEARCH REPORT
### Information on patent family members

International application No.

**PCT/CN2024/138546**

| Patent document cited in search report | | | Publication date (day/month/year) | Patent family member(s) | | | Publication date (day/month/year) |
|---|---|---|---|---|---|---|---|
| CN | 115113240 | A | 27 September 2022 | None | | | |
| CN | 115113242 | A | 27 September 2022 | None | | | |
| CN | 102508263 | A | 20 June 2012 | CN | 102508263 | B | 24 April 2013 |
| CN | 113466898 | A | 01 October 2021 | CN | 113466898 | B | 19 August 2022 |
| CN | 115826000 | A | 21 March 2023 | None | | | |
| CN | 101441260 | A | 27 May 2009 | CN | 101441260 | B | 06 April 2011 |
| US | 2023228886 | A1 | 20 July 2023 | CA | 3236798 | A1 | 06 July 2023 |
| | | | | EP | 4457541 | A1 | 06 November 2024 |
| | | | | AU | 2022427692 | A1 | 16 May 2024 |
| | | | | WO | 2023129763 | A1 | 06 July 2023 |
| | | | | CN | 118284828 | A | 02 July 2024 |
| | | | | BR | 112024006159 | A2 | 06 November 2024 |
| US | 2020041656 | A1 | 06 February 2020 | US | 11187810 | B2 | 30 November 2021 |
| | | | | JP | 2020512560 | A | 23 April 2020 |
| | | | | JP | 6921982 | B2 | 18 August 2021 |
| | | | | WO | 2018177555 | A1 | 04 October 2018 |
| | | | | EP | 3602129 | A1 | 05 February 2020 |
| | | | | EP | 3602129 | B1 | 17 March 2021 |
| | | | | CN | 110418979 | A | 05 November 2019 |
| | | | | CN | 110418979 | B | 16 May 2023 |
| EP | 1170597 | A1 | 09 January 2002 | ATE | 368233 | T1 | 15 August 2007 |
| | | | | DE | 60035675 | D1 | 06 September 2007 |
| | | | | DE | 60035675 | T2 | 30 April 2008 |
| | | | | EP | 1170597 | B1 | 25 July 2007 |
| JP | 2004271190 | A | 30 September 2004 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311719899